# EUROPEAN PATENT SPECIFICATION

(11) **EP 0 784 902 B1**
(45) Date of publication and mention of the grant of the patent: **04.12.2002**
(21) Application number: 96925353.3
(22) Date of filing: 18.07.1996
(51) Int. Cl.: H04N 7/00, H04N 5/445

(54) **INFORMATION AND ENTERTAINMENT CENTERS**
INFORMATIONS- UND UNTERHALTUNGSZENTRA
CENTRES D'INFORMATION ET DE LOISIRS

(30) Priority: 24.07.1995 US 505969; 12.01.1996 US 10349
(43) Date of publication of application: 23.07.1997
(73) Proprietor: Icebox LLC, Lake Forest, Illinois 60045 (US)
(72) Inventor: HARRISON, Robert G., Seattle, WA 98109 (US); LAMSON, Robert, D., Seattle, WA 98102 (US)
(74) Representative: Boff, James Charles
(86) International application number: US9611870
(87) International publication number: WO97004592

(56) References cited:
- EP-A- 0 075 026
- US-A- 4 628 351
- US-A- 5 033 969
- US-A- 5 283 819
- US-A- 5 386 251
- US-A- 5 410 326
- US-A- 5 414 761

## Description

### TECHNICAL FIELD OF THE INVENTION

The present invention relates to a novel, user friendly system or appliance with a remotely operable, integrated unit or module capable of converting to visual and audio outputs both television signals and information retrieved from an onboard, laser readable, data storage device.

In a typical application of the invention, the system is designed to be employed in a home-type kitchen and to make available both television programs and information of interest to a cook; and the principles of the invention will be developed primarily by reference to this exemplary application of those principles. It is to be understood, however, that this is being done for the sake of brevity and clarity and is not intended to limit the scope of the appended patent claims.

### DEFINITION

"Television set" is used herein in a generic sense to include both television monitors and television receivers.

### BACKGROUND OF THE INVENTION

It is well-known that many cooks enjoy watching television while they are in the kitchen, and it is equally well recognized that many of those persons have a need for information regarding tasks in which they are engaged. This is demonstrated by the popularity of cooking shows on television. Unfortunately, those shows are more entertaining than informative; they do not provide information which may be needed by the cook or present information in a form which allows the information to be conveniently utilized by the cook.

Other methods of presenting information to a cook have their own drawbacks. Cookbooks are often awkward to use while engaged in food preparation. "Computer cookbooks" require expensive equipment which may take up an unacceptable amount of space and may be perceived to be out-of-place in a kitchen because of the risk of damaging the computer with soiled hands, by the accidental spillage of liquids, etc. Furthermore, the cook is tied to the location of the computer's input device and, perhaps more importantly, many may be unwilling to deal with a computer at all. Also, reliance on both printed and computer cookbooks requires that one supply a separate television set for that commonly wanted source of information and entertainment This can make a computer cookbook unacceptable from viewpoints of space requirements and costs.

Thus, there is an existent and continuing need for a unit which can be easily controlled by a user as she or he moves about an area to make available either a television broadcast or easily and speedily retrievable, stored information needed for the task in which the user is engaged. A further attribute, if not absolute requirement, is that the product be self-teaching - i.e., that it have the ability to coach a user on its use so that the user does not have to consult written instructions at all, let alone an instruction manual having the complexity of those commonly accompanying personal computers and electronic entertainment devices such as VCR's and compact disc players.

EP 0075026 discloses a microwave oven having a CRT display on which can be presented information concerning a selection of foodstuffs in accordance with a fixed menu structure. US5033969 provides a support device for a laser vision disk player, providing answers to predetermined questions selected by using a keypad, the available questions and answers being determined by the elapsed playing time of the laser disk.

### SUMMARY OF THE INVENTION

An information storage and retrieval system which can be employed in a first mode to watch television and in a second learn while doing mode according to the invention is defined in claim 1. Such systems preferably combine, in a single cabinet, a television set and a player for a laser readable, data storage device such as a video compact disc, an audio compact disc, a laser disc, or one of the soon to be available digital video discs. The television set is for the most part conventional. It has the customary onboard controls and input jacks for making connections to an antenna, a cable system, a VCR, etc.

Video compact discs are typically preferred over video discs and other usable information storage devices such as audio compact discs at the present time although this preference may shift as digital video discs become available because the latter have a significantly greater capacity (5-10 gigabytes). Compact discs are easily handled and stored, and the circuitry needed in the integrated unit to connect the compact disc player output to the television set is relatively simple and correspondingly inexpensive. Video discs are preferred over audio discs because a visual/audio presentation of a subject (or even a visual presentation alone as in the case of a recipe) will typically be superior to sound alone in conveying information to the system user.

Stored on the preferred video compact disc are an introductory video which describes the operation of the unit; a hierarchy of user-retrievable, multiple choice menus; and, for each of the choices in the lowest level menu employed in navigating a particular course through the hierarchy, the instructions or other information sought by the user. The selected information can be displayed statically on the screen of the integrated unit or presented as a video for visual and audible reception, often as a demonstration of a technique for performing a particular task. These dynamic presentations are preferably of short duration and focused on specific items of information so that the presentation can be readily assimilated by the user.

The introductory video allows a new user to easily use the system to access selected information on the very first try without training or guidance from another person and without consulting written instructions. For many, the elimination of the need to refer to written instructions is of paramount importance as they consider any more than the most rudimentary written instructions distasteful, if not something to be avoided at all costs.

Associated with the integrated unit (or module) is a novel remote control which allows the system user to control the integrated unit functions from the location where he or she is performing a task or is otherwise occupied rather than tying the user to a specific location to look up information as is the case with conventional and electronic cookbooks. The remote unit has controls for all of the conventional television functions and a control which allows the user to switch at will between the television and information accessing modes of operation. Controls for the disc player may also be provided at the expense of increasing the complexity of the remote control.

The remote unit controls may wholly or in part be duplicated by integrated onboard controls. For the sake of convenience, clarity, and brevity, reference will be made primarily to the remote unit controls in this summary and the ensuing detailed discussion and description of the invention.

When the information accessing mode of operation (the COACH mode) is selected after the integrated unit is turned on, that unit defaults to and plays the introductory, instructional video. By depressing a single, RESTART button on the remote control, the user can recycle to the beginning of the video after it has finished playing or at any time while the video is playing. This is particularly advantageous to the new user who can thereby easily play the introductory video as many times as is perceived to be necessary to assimilate information which the video presents.

A second, FWD (forward) button allows the user to skip at any point in the introductory video to the highest level menu in the menu hierarchy. Unless the FWD button is first pressed, the advance to the top level menu will automatically occur when the introductory video ends.

Once the highest level menu is reached, the user is instructed to navigate through the menu hierarchy by using numbered - ① through ⑨-buttons on the remote unit (or control) to, beginning with the top level menu, select one of the menus available on each successively lower level and to make a choice of the items of information available from the lowest level menu in a particular set of menus. Choices of lower level menus and of items of information are numbered so that the user can make a choice by pressing the correspondingly numbered button.

If the choice from the selected lowest level menu results in a video or audio selection being played (typically one lasting from 30 seconds to 8 minutes), the user is automatically returned to the menu (lower level) from which the selection is made upon completion of the presentation.

If a static display of information is present on the integrated unit screen, that display will stay on the screen until taken off by the user. That is done by pressing a BACK button on the remote control unit. This returns the user to the menu from which the information was selected.

The BACK button can also be employed to back the user up through the hierarchy of menus to the top level menu and from the latter to the introductory video. The user is backed up one step each time this button is pressed.

The integrated unit is preferably constructed so that, unless it is first turned off, operation in the information mode of operation will continue from the point where it is interrupted if the unit is switched from the instructional and information retrieval (COACH) mode to the television mode. This is another important feature of the invention from the viewpoint of convenience. The user is thereby relieved of the task of navigating through the introductory video and perhaps an entire hierarchy of menus to the point previously reached if he or she wishes to: (a) interrupt a search for, or the display of, information to watch television; and (b) then return to the search or viewing of the displayed information.

There are occasions on which a user may wish to review all or part of the introductory video after having navigated part way or all the way through the hierarchy of menus. The user can return directly to the beginning of this video from any level of operation by depressing the RESTART button on the remote control unit once.

Other users may prefer to avoid repeated playing of the introductory video when the RESTART button is pushed to return the user to a point where he or she can pursue information that is not directly accessible from the location where the user is. In this circumstance, the controls can readily be programmed so that the depressing of the RESTART button will return the user to the top level menu instead of the introductory video.

The numbered choices available on each of the menus in the hierarchy are preferably limited to nine. This makes it possible to select any option from a menu by pressing a single, correspondingly numbered button on the remote control. The one-button feature is thus also a significant contributor to the featured ease of operation of the present invention.

Another feature of the remote control is that its interior is completely isolated from the surrounding environment. This is important as liquid, particulate, and other contaminants abound in kitchens and in other environments where systems employing the principles of the present invention are perhaps most likely to be used.

In addition, the remote control is preferably so designed and constructed that it can be easily operated with one hand and without picking it up and so that its controls are easily viewed at arm's length. Both of these features are important for one engaged in other tasks. In preferred forms, the remote control is designed to sit firmly on a table, countertop, etc. with function controlling buttons extending through a sloping (or inclined) face so that these buttons can be easily seen and pressed.

It is preferred that the remote control employ a radio frequency (R-F) transmitter as opposed to an infrared or other device to transmit or broadcast control signals to the integrated unit of the system. This makes the aiming of the remote control at the sensor of the integrated unit much less critical. This can also be significant to one using the remote control while engaged in another task.

The integrated unit of the present invention is typically portable, as was discussed above. This unit is light and has a small footprint It can therefore be readily handled and takes up a minimum of perhaps limited counter or other surface space. The objective of nonobtrusiveness may be furthered by employing: (1) an integrated unit cabinet which features a carrying handle in its top wall with (2) a complementary bracket to which the handle can be coupled. This arrangement allows the unit to be mounted beneath a kitchen cabinet or in another, relatively out-of-the way or nonintrusive location.

Other, singularly important features of the present invention are: (a) the prerecorded (or encoded) data storage devices used in appliances of the character described above, and (b) methods for producing those devices. A prerecorded data storage device, in this context and for the purposes of the present invention, is a video compact disc or alternative permanent memory device which contains, in a digitized form retrievable by an appropriate disc player or other data retriever. (a) information for coaching one through the carrying out of tasks and/or the steps of tasks; and (b) control instructions which allow the user to reach and bring up a (typically) visual or visual-audio display of information by which the user is coached through a task at hand or a step of that task Data, in this respect, is used herein to include both the stored digital code which represents the information available to the user and the stored digital code for the control instructions.

The initial step in the disc-producing process is to select the task - or more often multiple tasks - which the user of the appliance can obtain coaching on. Unless a task is extremely simple, it is divided into a set of logical steps arranged in an orderly sequence. The steps are self-contained; i.e., the user does not have to retrieve information on a preceding or subsequent step to be completely coached with respect to the step focused on at any given time.

The next step is to select an appropriate information format for coaching a user on accomplishing one or more (typically all) of the steps into which the task has been divided (or on the task itself if, for example, the task employs only a single step). Available formats include static textual, graphic, and graphic-textual displays and video presentations. In many, if not the majority of, cases the visual presentation will be accompanied by appropriate audio.

Typically in parallel with the two preceding steps, an instruction set for each task is generated. This instruction set enables the command options available to the user for each task - for example: display the next lower level menu, display the information available on a specific step of the task, return to the introductory video, etc.

Once the coaching information and the instruction sets are generated, the video data is compressed; and authoring software is employed to convert or translate the instruction set and coaching information to a format readable by the compact disc player or other data retriever. The thus formatted data is then read to the data storage device. If the storage device is a video compact disc as is presently preferred, a conventional CD writer will be employed for this step.

Prerecorded compact discs and other encoded storage devices embodying the principles of the present invention are unique in that they make a leam-while-doing way of performing a task available to a user of equipment employing the encoded data storage device. The present invention emphasizes a watch-then-perform approach to the accomplishment of each step in a task, and the instruction set is so constructed that the user can easily reach the information relating to the performance of a particular step, repeat the presentation of that information, advance sequentially through the steps of the task, skip steps, return directly to an introductory video or the first step of the task, and otherwise navigate through the available choices in a fashion which best meets his or her needs.

Prerecorded compact discs which allow a user to select visually displayable and visual-audible segments from the disc are available. These currently available discs are of quite different character from those disclosed herein. They do not have the capability of coaching one in the accomplishment of a task, let alone give one the ability to: select only those steps of a task on which coaching is wanted, repeat the presentation of information on a selected step, advance through available steps in a user-customized manner, return directly to an initial step or introductory video, or otherwise navigate through available choices as he or she elects. Instead, all that is typically available is a generally lengthy video, much of which may be of no interest. To locate and view only a wanted part of such a video is cumbersome and time consuming, at best. Also, the information is typically not performance oriented. It does not coach one on how to carry out a task or steps of a task.

Furthermore, the instruction sets found on conventional discs do not have the versatility of those disclosed herein. For example, no provision is made for navigating through a hierarchy of menus, for a one-step return to an introductory video or the top level menu in a menu hierarchy, for repeated viewing of coaching information presented in a video format, etc.

As will be apparent to the reader from the just-concluded discussion of the present invention's encoded data storage devices, another, and obviously very important, advantage of the invention is that it may be readily adapted for use in any of a wide variety of environments. All this requires is a disc or other information storage device coded with information appropriate for the task at hand. Similarly, added information storage modules (or devices) can be supplied to increase the amount of information available on a particular subject, be it food selection and preparation or a different area of interest. The use of easily loaded and replaced information storage devices such as inexpensively supplied video compact discs also makes it very practical to combine easily accessed and almost immediately accessible information in different categories which may be useful to one in a particular setting. For example, a hierarchy of menus concerned principally with food selection and preparation may include at one level a menu with choices giving information on or demonstrating first aid procedures for dealing with accidents apt to occur in a kitchen or elsewhere in the environment of a home.

The objects, advantages, and features of the invention will be apparent to the reader from the foregoing and the appended claims and as the ensuing detailed description and discussion of the invention proceeds in conjunction with the accompanying drawings.

### BRIEF DESCRIPTION OF THE DRAWINGS

FIG. 1 depicts, pictorially, an entertainment/information system embodying the principles of the present invention;
FIG. 2 is a pictorial view included to show a mounting arrangement for an integrated unit of the FIG. 1 system; unnecessary details of the integrated unit have been omitted in this figure;
FIG. 3 shows, in schematic form, the operating system of the integrated unit;
FIG. 4 is a plan view of a remote control which is another component of the FIG. 1 system;
FIG. 5 is a partial section through the remote control, taken substantially along line 5-5 of FIG. 4;
FIG. 5A is a second, partial section through the remote control, taken substantially along line 5A-5A of FIG. 1;
FIG. 6 depicts, in schematic form, the operating system of the remote control;
FIG. 7 shows, diagrammatically, one representative navigational chart which includes an introductory video and a hierarchy of menus that can be quickly and easily navigated by a user of the FIG. 1 system to reach information of interest stored on a video compact disc or other data storage device;
FIGS. 8-10 depict a representative set of menus which would be displayed to a user following the FIG. 7 navigation chart to reach information on dry and bottled goods with which a pantry might be stocked;
FIGS. 11 and 12 are two screens of information which are available for display to the system user when the user makes a choice from the lowest level menu in those hierarchically arranged menus depicted in FIG. 7;
FIG. 13 is a navigation chart akin to that of FIG. 7 but differing in that: (a) more levels in the menu hierarchy are employed, and (b) the selection of an option from the lowermost menu results in a dynamic, video presentation of information; in the illustrated sequence of selections, this a video on making pan gravy;
FIGS. 14-17 show the menus that are sequentially displayed to the user in following the course charted by the FIG. 13 plot;
FIG. 18 depicts a third navigation chart which leads in a minimum number of steps to an instructional video which is automatically recycled until stopped by the user, this rapid access to, and automatically repeated representation of, information is particularly useful to one engaged in rendering first aid, for example;
FIGS. 19 and 20 show the two menus presented to one employing the FIG. 18 chart to reach first aid information;
FIG. 21 depicts, in block diagram form, the steps of the novel process employed in making a prerecorded data storage device embodying the principles of the present invention;
FIG. 22 is a block diagram showing how data representing: (a) information, and (b) instruction sets is compressed, translated to a retrievable format, and written to the data storage device;
FIG. 23A shows the relationship between FIGS. 23A-1 and 23A-2; the latter two figures and FIG. 23B, taken together, constitute a representative data storage layout which embodies the principles of the present invention and which includes: (a) an introductory video, (b) a hierarchial array of user navigable menus, and (c) dynamic (video clip) and static (graphic-textual) presentations of information which can be reached by a user of the FIG. 1 appliance and employed to coach the user through the steps of a representative task depicted in the layout; and
FIG. 24 is yet another navigation chart embodying the principles of the present invention.

### DETAILED DESCRIPTION OF THE INVENTION

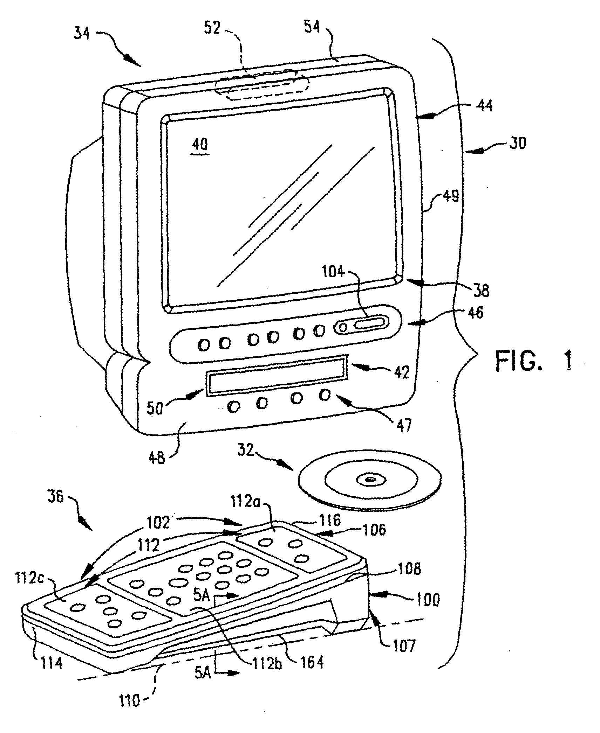

Referring now to the drawings, FIG. 1 depicts an entertainment/information system (or appliance) 30 which embodies the principles of the present invention and is so constructed that one can easily, and at any time, switch between: (a) television, and (b) the retrieval and presentation of information stored in digital data form on a device such as the illustrated video compact disc 32. The major components of system 30, aside from data storage device 32, are an integrated unit (or module) 34 and a remote control 36.

Integrated unit 34 includes a television set 38 with a screen 40 and a video compact disc player 42, both housed in the same cabinet 44. Conventional controls 46 for television set 38 are located on the front panel 48 and one side panel 49 of cabinet 44, and controls 47 for disc player 42 are also located on front cabinet panel 48. A conventional tray 50 is used to load a disc 32 into player 42.

In the interest of making system 30 user friendly, the controls 46 and 47 are preferably color coded. Those controls typically provided and a representative color coding scheme appear in Table 1 below:

**Table 1**

| TELEVISION | | |
|---|---|---|
| **Front Cabinet Panel 48** | | |
| Control | Color | Function |
| ON/OFF | GREEN | Turns television set 38 and disc player 42 on and off, both at the same time |
| Volume+ | GRAY | Increases sound level |
| Volume- | GRAY | Decreases sound level |
| Channel+ | GRAY | Increases channel number by one |
| Channel- | GRAY | Decreases channel number by one |

| **Side Cabinet Panel 49** | | |
|---|---|---|
| Control | Color | Function |
| Contrast | BLACK | Shifts or decreases picture contrast |
| Brightness | BLACK | Increases or decreases picture brightness |
| Color | BLACK | Increases or decreases picture color intensity |
| Tint | BLACK | Shifts picture hue between red and green |
| Sharpness | BLACK | Increases or decreases picture sharpness |

| DISC PLAYER | | |
|---|---|---|
| **Front Cabinet Panel 48** | | |
| Control | Color | Function |
| Eject | GRAY | Opens Drawer 50 |
| Play | GREEN | Begins playing video compact disc 32 |
| Stop | GRAY | Stops playing video compact disc 32 |
| Forward | GRAY | Skips forward and plays the next selection on video compact disc 32 |
| Back | GRAY | Skips back and plays the previous selection video compact disc 32 |

It is not critical that the particular complements of controls identified in Table 1 be employed. Particularly in the case of the disc player, additional controls can be provided for additional modes of operation such as random play, programmed order of play, etc.

Portability is promoted to a significant extent by the integration of television set 38 and disc player 42 into a single module. This reduces to the smallest number the units that must be handled and eliminates the external cables that would otherwise be required as well as the onerous and technical task of hooking up the components. Instead, all that is necessary is to locate unit 34 in an appropriate place, plug its external power cord (not shown) into an electrical outlet, and plug a lead from an antenna or cable TV outlet into the unit.

As mentioned above, video compact discs are preferred as they are easily handled and stored, yet have enough data storage capacity to make available dynamic, visual/audio presentations of information. Also, compact discs are durable and impervious to contamination and rough handling. Nevertheless, it is not essential that this particular type of information storage device be employed. Alternatives include laser discs which, while perhaps more cumbersome, have the advantage of holding more information; audio compact discs, which can be employed in circumstances in which there is nothing to be gained by a visual presentation of information; and DVD discs, which combine a compact size with a large data storage capacity.

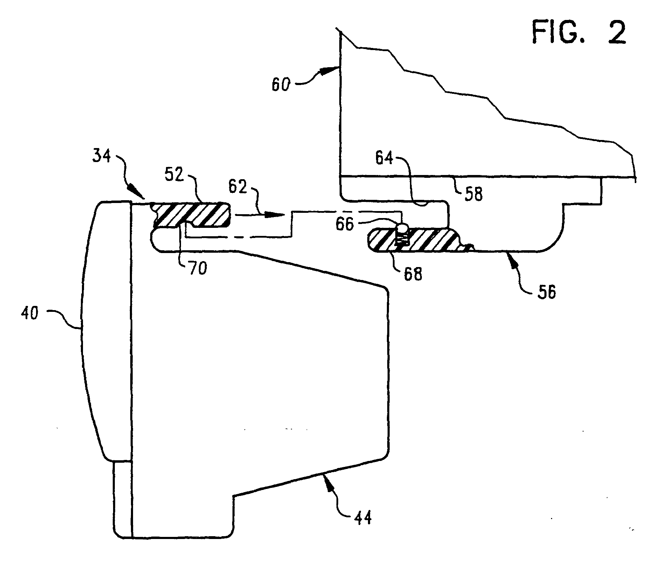

Integrated unit 34 is lightweight and portable, and handling is facilitated by a handle 52 integrated into the top wall 54 of cabinet 44 (see FIGS. 1 and 2). Integrated unit 34 also has the advantage of a small footprint. This is advantageous in those applications of the invention where the space available to support the integrated unit is at a premium.

Also, integrated unit 34 may be advantageously kept out of the way by employing the support bracket 56 shown in FIG. 2. In the representative, kitchen-employed application of the invention, bracket 56 is mounted to the bottom 58 of an upper (or overhead) kitchen cabinet 60. Integrated unit 34 is shifted in the direction indicated by arrow 62 in FIG. 2 to displace handle 52 into a complementary recess 64 in bracket 56. This movement in the arrow 62 direction is continued until a spring-loaded detent 66 in lower flange 68 of bracket 56 engages a complementary recess 70 in handle 52 to removably lock integrated unit 34 to bracket 56. The same type of mounting arrangement may of course be employed in other applications of the invention to support integrated unit 34 from an overhead structure in an unobtrusive location.

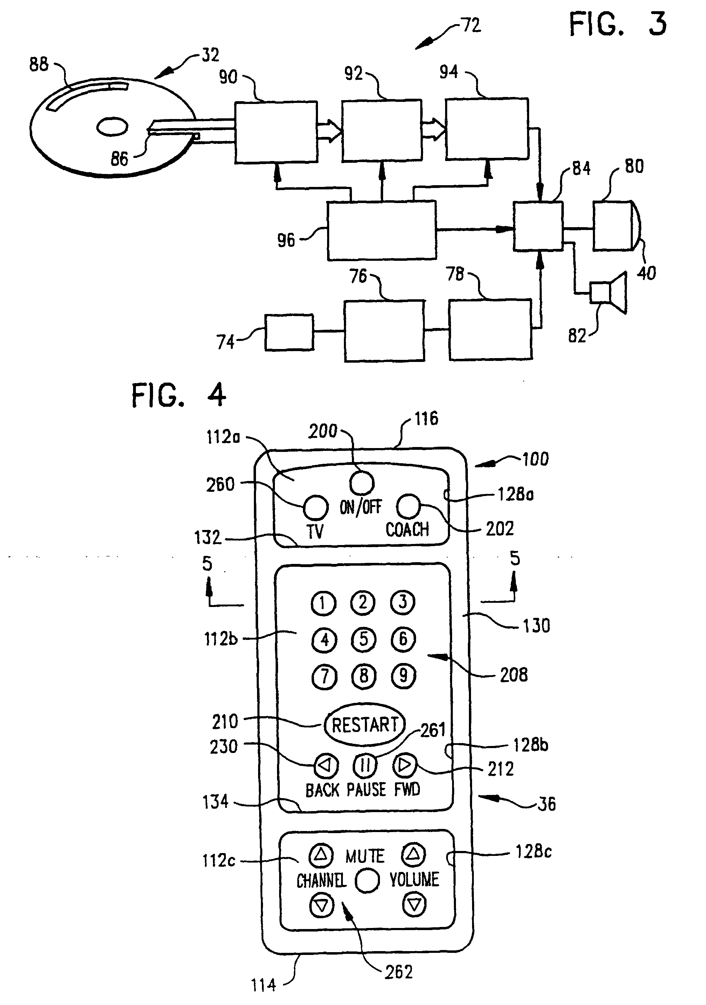

The internal, operating components of integrated unit 34 are depicted schematically in FIG. 3 and identified by reference character 72. These components include input jacks which are collectively identified by reference character 74 and are employed to connect the integrated unit to a television signal source - a television antenna or cable and/or a VCR. A tuner 76 is employed by the user to select one of the available television channels to watch or to select the VCR channel (usually 3 or 4) at the user's location. The selected (off-the-air or VCR) signal is directed to a video/audio generator 78 which converts the selected incoming signal to a video signal which is converted to visual images by cathode ray tube (CRT) 80 and displayed on the CRT screen 40 of television set 38 and to an audio signal which is converted to audible sound as by the illustrated speaker 82. The video and audible signals are routed to CRT 80 and speaker 82 through an electronic switching device 84 which allows a user to choose between television reception and the retrieval of information from storage disc 32.

The television set 38 and disc player 42 are powered up together so that integrated unit 34 is always available for use in the COACH mode when unit 34 is turned on. Most system users can be expected to watch television more often than they retrieve stored information. Therefore, mode switching device 84 is so programmed or constructed that unit 34 will default to the television mode of operation when integrated unit 34 is turned on.

Referring still to FIG. 3, video compact disc player 42 has a conventional mechanism (not shown) for spinning the laser readable disc and an equally conventional laser pickup 86 for reading information stored in digital data files in the tracks 88 on discs 32 (only one of which is shown). The output from pickup 86 goes to a data reader 90, which outputs a stream of digitally compressed data (the form in which the data is stored on disc 32). The data reader is connected to a decompressor 92 for the data retrieved in the compressed format. After decompression, the data is routed to an analog signal generator 94 which converts the data to video and audio analog input signals utilizable by CRT 80 and speaker 82 to generate visual images and audible sound. The operation of the data reader, the data decompressor, and the signal generator is controlled in a conventional manner by microprocessor 96.

Referring now to FIGS. 1, 4, 5, and 5A, the remote control 36 of entertainment/information system 30 frees the user of the system from the location of integrated unit 34. This is a feature of particular significance from the viewpoint of convenience, if not that of practicality. In the typical, kitchen application of the invention, for example, this allows the user to access information stored on disc 32 at the location where the user is engaged in the task regarding which information is sought. This contrasts directly with the modus operandi of written and electronic cookbooks which require that the user go to the cookbook location to retrieve the information.

Remote control 36 differs from a conventional electronic equipment remote control in that it need not be picked up to be operated but can be conveniently employed while located on a table, countertop, etc., thus requiring only one hand for operation. As indicated above, this feature is of considerable importance because those using a system of the character described herein may simultaneously be engaged in a task which makes it inconvenient, if not impractical, to use a conventional remote control requiring one hand to hold the device and the other to press its operating buttons.

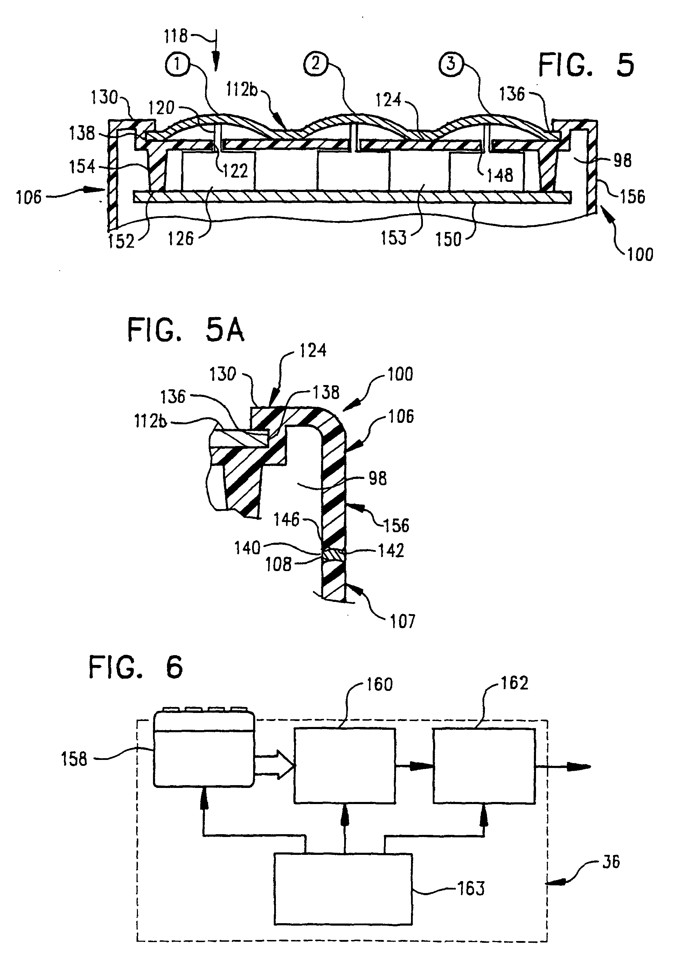

Another important feature of remote control 36 is that the interior 98 of this unit (see FIGS. 5 and 5A) is sealed. This keeps liquids, dust, and other foreign matter apt to be present in kitchen and other environments in which system 30 can advantageously be employed from penetrating to interior 98 of the remote control. Foreign matter can interfere with the operation of, if not actually damage, the internal remote control components.

Remote control 36 includes a casing 100 and a complement of controls collectively identified by reference character 102 for operating integrated unit 34. These controls are preferably of the pushbutton type, with the actuation of each button causing remote control 36 to broadcast a distinctly coded operating signal to integrated unit 34. It is preferred that radio frequency (R-F) signals be employed. Signals in this frequency range have a relatively broad dispersion pattern. Therefore, the accuracy with which remote control 36 has to be aimed at the sensor 104 on the front panel 48 of integrated unit cabinet 44 to operate television set 38 or disc player 42 is not critical. This is a significant convenience to a user of system 30, who may be engaged in another task while using the remote control and may furthermore be employing the remote control in a tabletop or comparable mode of operation with the remote control so oriented that the axis of the transmitted signal is not precisely aligned with sensor 104.

Like those on the front and side panels 48 and 49 of integrated unit cabinet 44, the controls 102 of remote control 36 are preferably color coded. Table 2 below identifies a representative set of controls, the colors assigned to the controls, the modulation frequency of the signal transmitted when each of the controls is pressed, and the function of each control.

**Table 2**

| Control | Color | Modulation Frequency | Function |
|---|---|---|---|
| ON/OFF | GREEN | 4160 Hz | Tums television set 38/ disk player 42 on and off |
| TV | GRAY | 4300 Hz | Places the television set 38 of integrated unit 34 and the remote unit controls 102 in the television watching mode |
| COACH | GRAY | 4500 Hz | Plays an introductory video and switches the buttons on remote control 36 to their COACH mode functions so that a user can view the introductory video and/or navigate through a hierarchy of menus to information on a menus to information on a subject of interest |
| ①... ⑨ | GRAY | 4700-6700 Hz | In the television mode select a television channel; in the COACH mode- select a correspondingly numbered option from a menu |
| RESTART | RED | 6900 Hz | Jumps to the introductory video |
| PREVIOUS | GRAY | 7100 Hz | Retreats to the previous step in a COACH mode sequence |
| PAUSE | GRAY | 7300 Hz | Freezes operation in the COACH mode until pressed again |
| FORWARD | GRAY | 7500 Hz | Advances to the next step in a COACH mode sequence of steps |
| CHANNEL + | GRAY | 7700 Hz | Selects the next higher television channel |
| CHANNEL- | GRAY | 7900 Hz | Selects the next lower television channel |
| MUTE | GRAY | 8100 Hz | Turns the sound off until pushed again |

Remote control casing 100 has an upper component 106 and a complementary lower component 107. The upper edge 108 of lower component 107 lies at an acute angle with respect to a horizontal surface 110 on which remote control 36 is placed. This results in the faceplate 112 of the remote unit sloping from the foot 114 of the unit to its head 116 (see FIG. 1). The buttons of complement 102 are as a consequence much more visible (even at arm's length) and much more easily pressed than would be the case if the remote unit (typically relatively thin) were lying flat. In that case, one would have to look almost directly down on the device from a close distance to see, and accurately manipulate, its control buttons.

Turning now to FIG. 5, the remote control buttons (the representative ones shown are ①, ②, and ③) may advantageously be provided in the form of convex protuberances which are integral with the faceplate 112 of remote unit 36 with the faceplate being fabricated from a material which is sufficiently resilient that the protuberances can be pressed as suggested by arrow 118 in FIG. 5. The pressing of a button in complement 102 displaces in the same direction a corresponding switch actuator 120 extending through an opening 122 in the top wall 124 of upper remote control casing component 106 and guided for rectilinear movement in the arrow 118 direction by the surrounding material of the top wall. The arrow 118 direction of movement of actuator 120 closes a corresponding, actuator-associated switch 126. This enables conventional R-F signal generating and multiplexing circuitry in the interior 98 of the remote control (see FIG. 6) to transmit a coded, modulated R-F signal unique to the button which is pressed.

Referring again to FIG. 5, the faceplate 112 of remote control 36 is typically divided into three segments such as those identified in FIG. 4 by reference characters 112a, 112b, and 112c, respectively; and complementary, faceplate receiving recesses 128a-c in remote control casing upper component 106 are defined by segments of a rim 130 around the periphery of upper casing component 106 and by transversely extending ribs 132 and 134 which are integral with upper casing component 106. Those edges of rim 130 and ribs 132 and 134 bounding each of the faceplate receiving recesses 128a-128c are slotted as indicated by reference character 136 in FIGS. 5 and 5A. Around its periphery, the edges 138 of each faceplate segment 112a-c are seated in segments of the associated complementary slot 136 to retain the faceplate segment in place.

Referring now most specifically to FIGS. 5 and 5A, it was pointed out above that the isolation of remote control interior 98 from fluid, particulate, and other foreign substances is an important feature of the present invention as system 30 will typically be employed in environments in which such substances are prevalent.

Penetration of foreign material through the gap 140 between the lower edge 142 of upper casing component 106 and the upper edge 108 of lower casing component 107 is precluded by adhesively or otherwise bonding a circumferentially extending gasket 146 between the upper and lower casing edges. The illustrated, undulant edge-and-gasket configuration is preferred for maximum sealing efficiency.

The penetration of foreign matter through the gaps between switch actuators 120 and the apertures 122 in upper casing component top wall 124 (a representative gap is identified in FIG. 5 by reference character 148) is precluded by the arrangement shown in FIG. 5. In particular, the switches 126 are mounted on a platform 150. This platform is bonded to the lower edge 152 of a depending, circumferential, imperforate boss 154 integral with top wall 124 of upper casing component 106. The boss is so configured and spaced from the side wall structure 156 of the upper casing component that all of the switches 126 are embraced and surrounded by the boss and isolated from the interior 98 of casing 100 in a compartment 153 defined by casing top wall 124, boss 154, and switch platform 150. The result is: (a) a primary seal between the edges 138 of faceplate segments 112a-c and the upper casing component structure bounding the faceplate segments, and (b) a secondary seal between the lower edge 152 of boss 154 and switch support 150. This combination of primary and secondary seals and the gasket 146 between the upper and lower casing components 106 and 107 effectively keeps foreign material from the interior 98 of remote control casing 100.

The signal generating and transmitting components of remote control unit 36 are shown in block diagram form in FIG. 6 and identified by reference characters 158, 160, and 162. These are, respectively, a keypad decoder, a R-F modulator, and a R-F transmitter. These components are of conventional construction, and their details are not part of the present invention. Accordingly, the subject circuits will not be described in detail herein.

Referring still to FIG. 6, a battery 163 is also housed in casing 100 to supply operating power to the just-described circuit components. The conventional opening (not shown) can be provided in the bottom wall 164 of lower casing component 107 so the battery 163 can be removed and replaced. A gasket is preferably provided between the removable cover for this opening and the casing bottom wall to keep foreign material from casing interior 98. A nonskid material (not shown) may be applied to bottom wall 164 at the foot 114 and head 116 of remote control 36 to eliminate slippage between the remote control and the surface 110 on which the unit is placed.

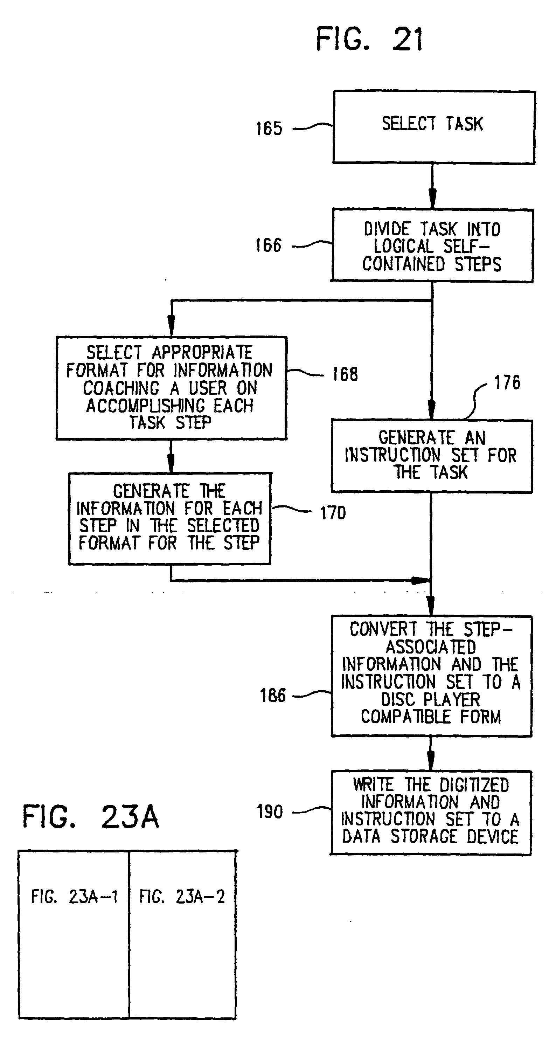

Referring still to the drawing, FIG. 21 shows in block diagram form the steps employed in producing a video compact disc which embodies the principles of the present invention and has stored thereon in digitized form data representing: (a) information for coaching a user of system or appliance 30 through a user-selected task or through user-selected ones of the steps involved in performing the task; and (b) an instruction set embodying the menu navigation and other options available to the system user.

The initial step in the disc-producing process of the present invention, identified by reference character 165 in FIG. 21, is to select and label those tasks on which coaching information is to be made available from a video compact disc or other data storage device. For example, as shown in FIGS. 23A-1, 23A-2, and 23B and as will be described in more detail below, the tasks selected for inclusion on a disc may all, as one example only, be associated with activities that may be undertaken by one working in a kitchen.

Once the tasks have been identified and labeled, each task - unless very simple - is divided into the steps which must be accomplished to complete the task as indicated by reference character 166 in FIG. 21. It is important, in this respect, that each step be self-contained and have a logical beginning and ending. For example, in a step describing the clapping of hands, one would begin with the hands apart; then being swung together into contact; and subsequently being swung apart to the initial, at rest position. One would not coach a person to clap hands by beginning with the hands in the middle of the inward swing; then being brought together; swung outwardly; and then swung inwardly to the starting, intermediate position. That "step" would not have a logical beginning or ending, and it would not be self-contained. One would have to refer to the presentation of information on at least one additional step to learn how to clap hands.

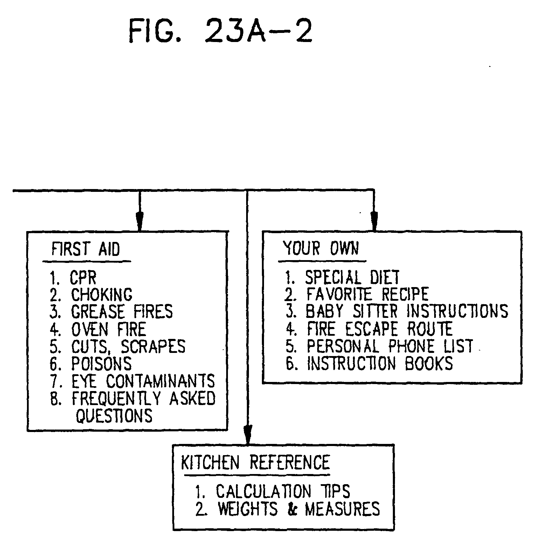

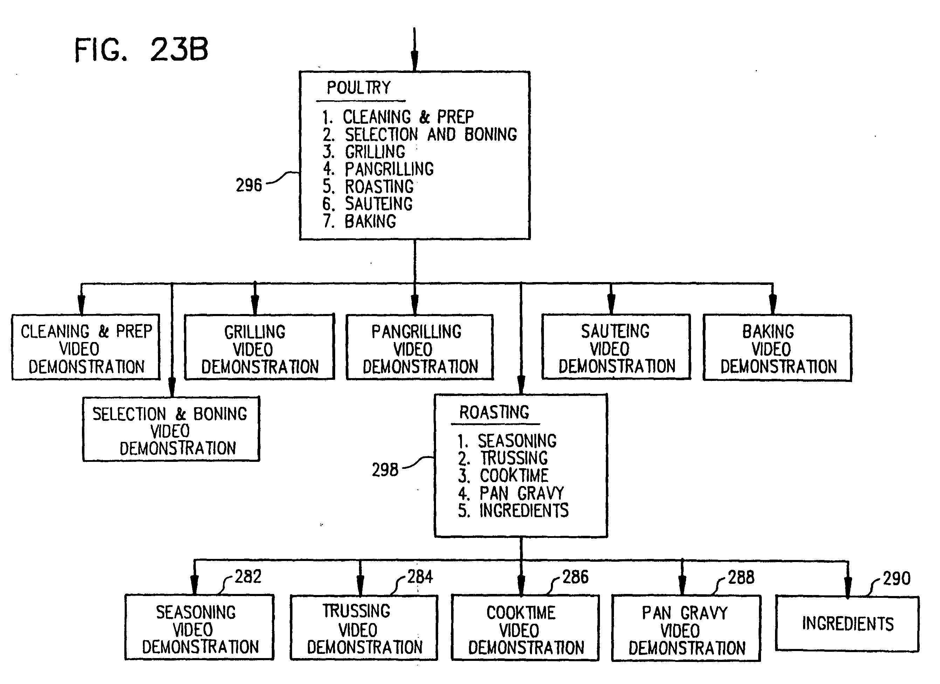

A third step 168 in the disc-producing process is to select the information format which can best be employed to coach one through each step of each selected task. Available, options are static displays of textual and graphic information or combinations thereof and video presentations, any of which may be accompanied by an audio presentation. One of the tasks depicted in detail in FIG. 23B by way of example is the roasting of poultry, a task which is divided into four logical, self-contained steps. For a step such as TRUSSING (step 2), a video demonstration (video clip) or other dynamic presentation of how a bird is trussed is the most appropriate. For option 5 (INGREDIENTS), a static display of the ingredients which must be on hand for the task of roasting a bird is more appropriate. In other cases, still within the purview of the FIGS. 23A-1, 23A-2, 23B example, a graphic-display may prove most helpful. An example might be a static graphic display showing the arrangement or presentation on a platter of the roasted bird with accompaniments and garnishes.

Step 168 is followed by step 170 in which the information for each step in the selected format is generated. Video clips are produced with a video recorder 172, typically a Betacam or other recorder capable of producing high quality video. It is important to control the lengths of the video clips. In many cases, clips less than 30 seconds in duration will not provide sufficient information to the system user to be optimally helpful unless a step on which the user is being coached is very simple. At the other end of the range, as the duration of the clip exceeds (typically) about eight minutes, the risk of flooding the user with more information than can be usefully assimilated rapidly escalates.

Statically displayed information in textual or graphical format or in graphical/textual form may be generated employing a conventional personal computer and a desktop publishing program such as Aldus PageMaker, for example. Typically, *.BMP files (reference character 174) are generated.

Usually, but not necessarily, while steps 168 and 170 are carried out, the instruction sets for the selected tasks are laid out (step 176).

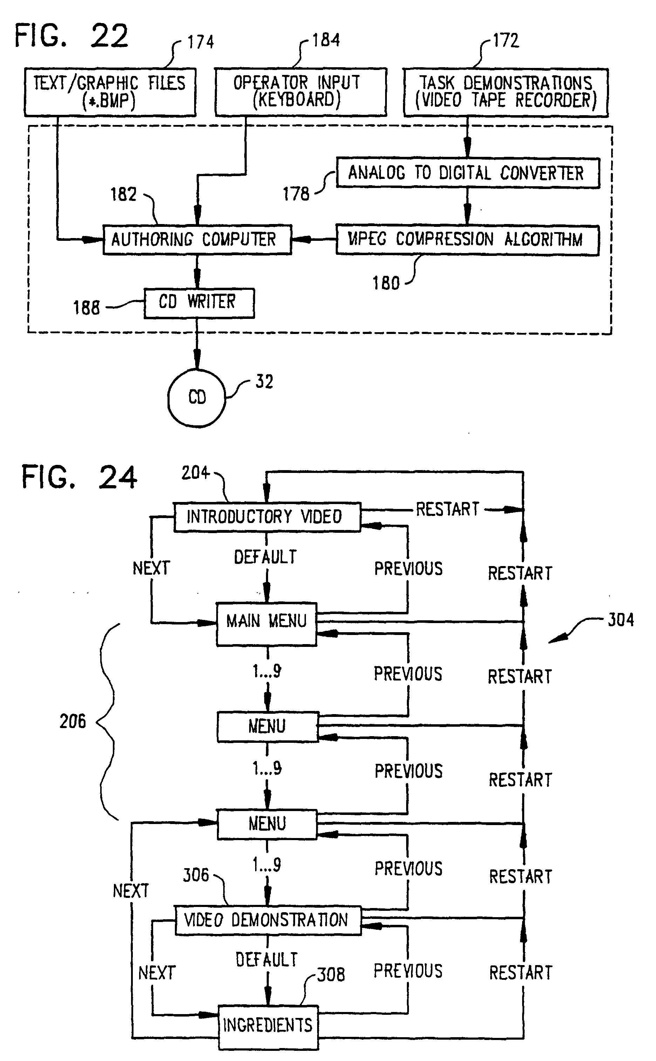

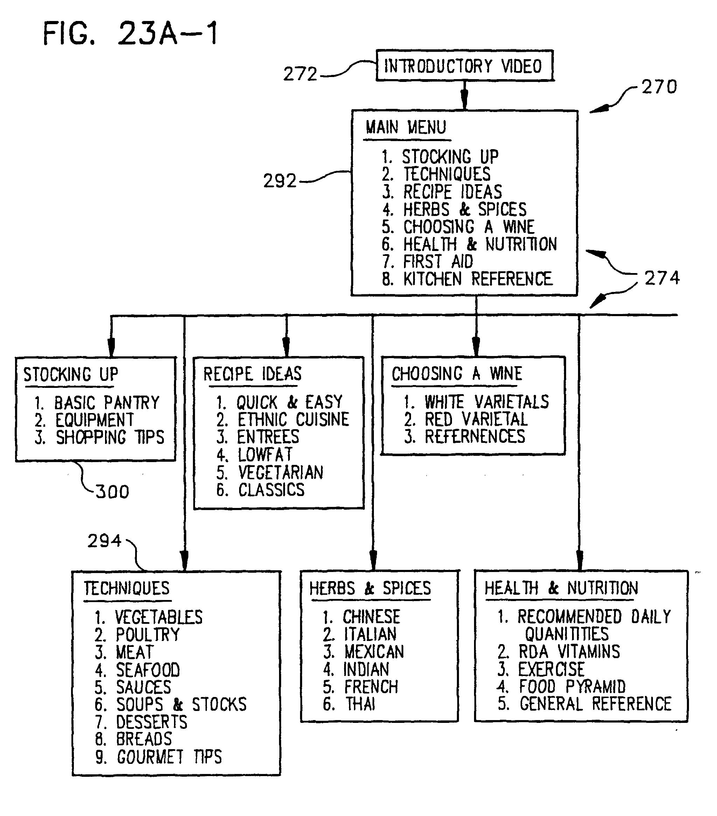

Referring still to FIG. 21 but also to FIG. 22, the analog signal generated by video tape recorder 172 is digitized by an analog to digital (A/D) convertor 178; and the digital data is compressed as shown by reference character 180. Software which conforms to the MPEG (Motion Picture Expert Group) Standard can be used to compress the digitized video signal. The digitized data is fed to a personal computer 182 in which an authoring program has been loaded. The *.BMP files representing statically displayable presentations are inputted to computer 182 in that format. Control instructions such as NEXT, PREVIOUS or BACK, and RESTART as described above and in more detail below and other components of the instruction set(s) are inputted to computer 182 from a keyboard 184 employing a PSD (program sequence descriptor).

The authoring software in computer 182 (for example, that supplied by Digital Video Systems) converts or translates the data inputted into the computer to a format which disc player 42 supports (step 186). The reformatted data is transferred to a conventional laser-based compact disc writer 188 which writes the data to the exemplary video compact disc 32, typically by burning conventional pits into the tracks 88 of disc 32 (step 190).

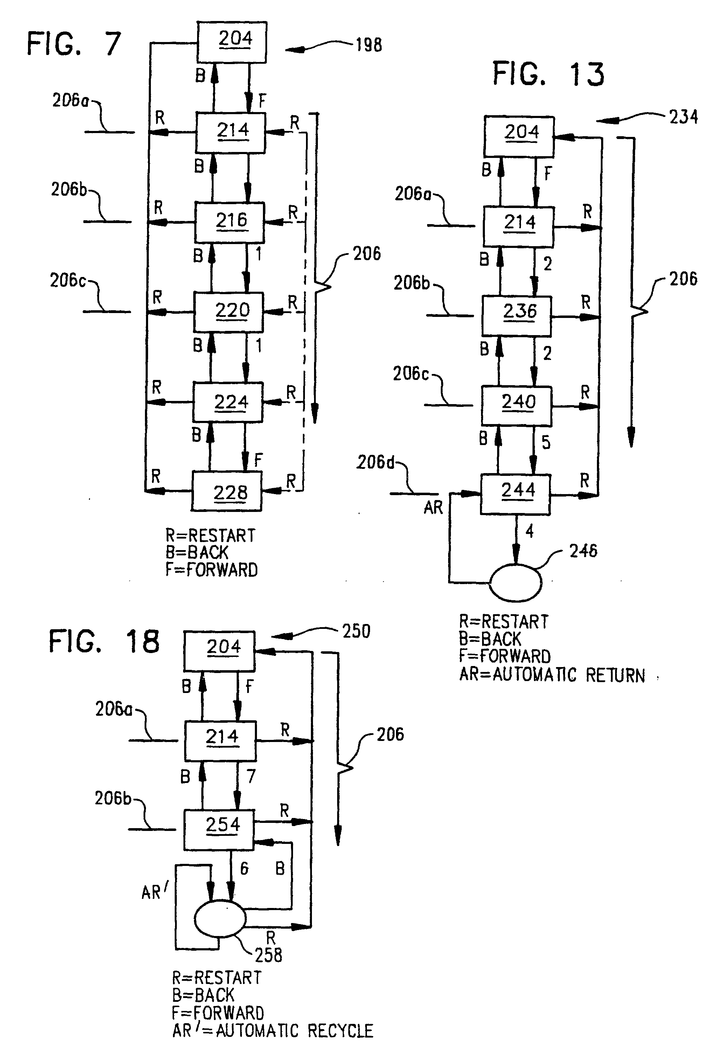

Referring still to the drawing, the chart 198 in FIG. 7 depicts one representative course that may be navigated to retrieve information on a selected subject from compact disc 32 and to display that information on the screen 40 of integrated unit 34. In this representative example, it is assumed that the user of system 30 is seeking information on stocking a pantry with dry and bottled goods.

First, the reader is reminded that integrated unit 34 defaults to the television reception mode of operation when the on-off switch 200 in the remote control complement 102 is pressed to turn on the television set 38 and disc player 42 of the integrated unit. To switch to the information retrieval or COACH mode, the user presses COACH button 202. This results in an introductory video 204 being retrieved from disc 32 and played. The introductory video describes the operation of system 30 and tells the user how to reach information on a subject of interest. This is done by navigating through a hierarchy of menus identified by reference character 206 in FIG. 7.

A representative system 30 employing the principles of the present invention will have five levels of menus, and the menus at each level may afford the system user up to nine choices. The hierarchal structure thus "fans out" from level-to-next lower level, giving the user up to 59,049 choices if five levels are used and if all menus on all levels provide the permitted maximum of nine choices as shown by the following table.

**Table 3**

| Menu Hierarchy Level | Number of Menus | Number of Choices (Descending Order) |
|---|---|---|
| Top (206a) | 1 | 9 |
| Second (206b) | 9 | 81 |
| Third (206c) | 81 | 729 |
| Fourth (206d) | 729 | 6561 |
| Bottom | 6561 | 59049 |

The choices at each level may be information - a static text, graphic, or text/graphic presentation or a video - instead of next lower level menu selections or a mixture of menu selections and informational choices. However, it may be desirable to avoid a mixed category to minimize confusion and promote ease of use.

It is emphasized that Table 3 is concerned only with a representative hierarchy of menus. There may be fewer - or more - than five levels in the hierarchy, and the hierarchy may be asymmetric. For example, at the third level of the Table 3 hierarchy, one or more of the menus may be a bottom level menu offering only options for selecting information available from that menu. Present at the same level may be one or more other menus offering choices leading to menus on the next lower (fourth) level. One example of an asymmetric hierarchy appears in FIGS. 7-12 of the drawings.

The choices available at each level are preferably limited to nine, and these are numbered so that, at every level, a choice can be made by pressing a single, correspondingly numbered one of the buttons ① through ⑨ in remote control numerical keypad 208 (see FIG. 4). This unique feature is another one which makes system 30 easy and convenient to use and therefore acceptable to a person without technical training or inclination and with only the instruction provided by introductory video 204.

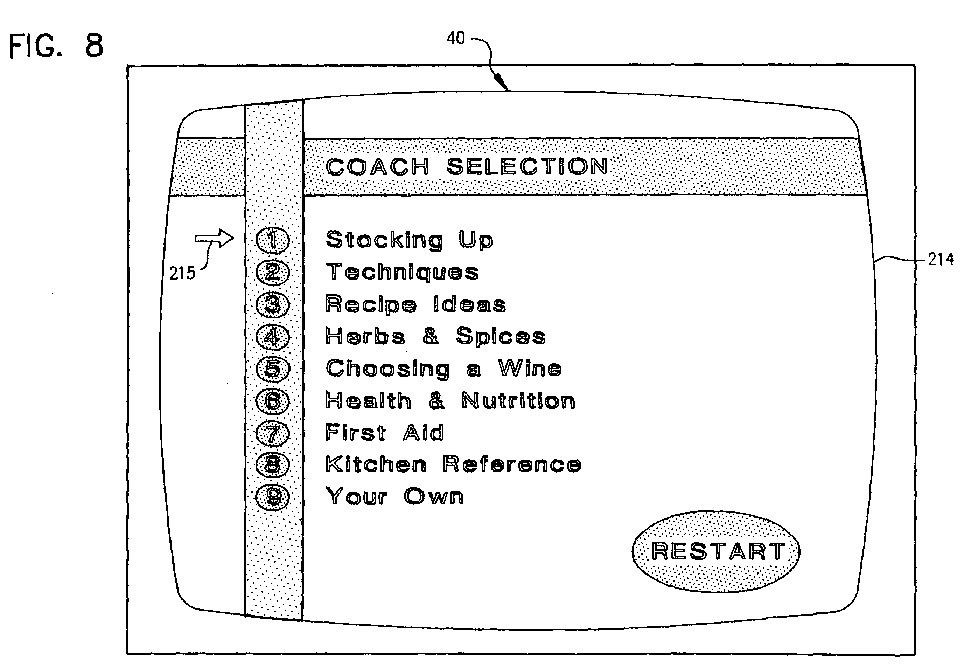

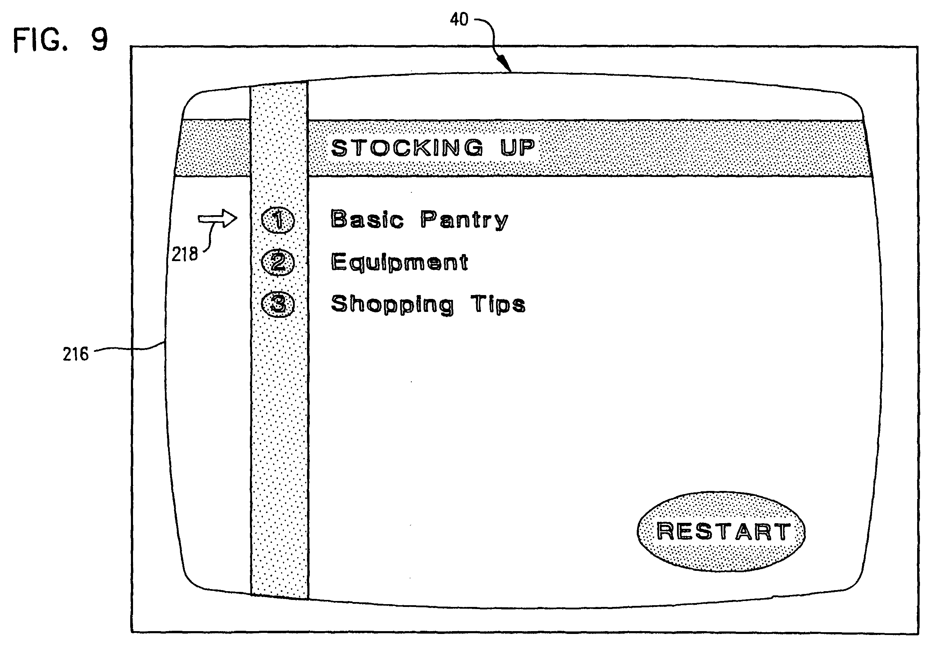

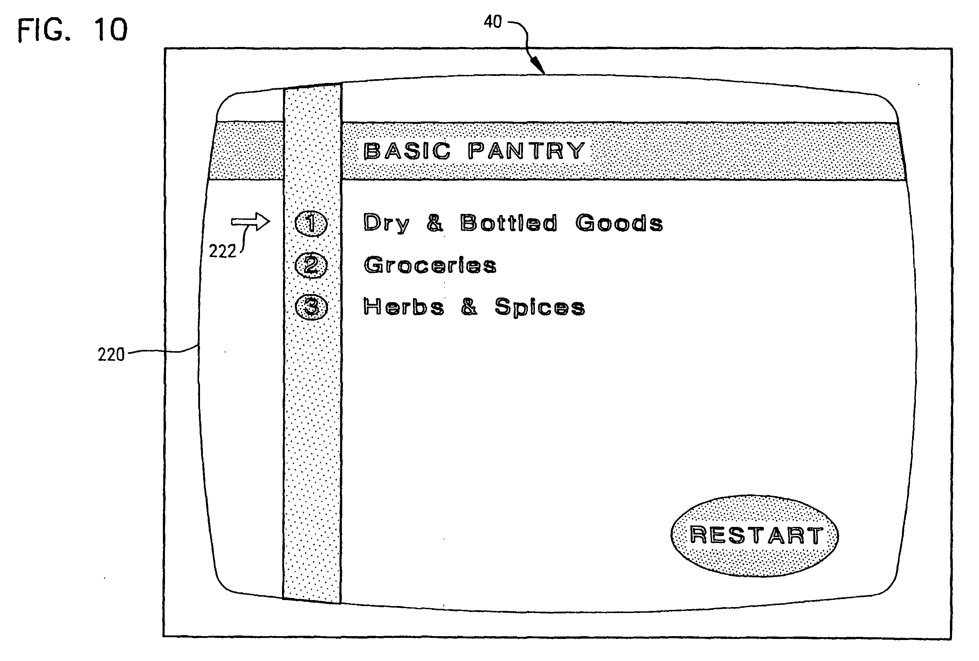

Once the introductory video 204 has been played, the user has two options. One is to press the dedicated RESTART button 210 of remote control 36. This causes the introductory video to be replayed. The second option is to press the also dedicated forward (FWD) button 212. This results in the top (206a) level menu 214 shown in FIG. 8 being displayed. That menu has nine choices with choice one being appropriate to reach the information of interest in the representative information selection example under discussion as indicated by arrow 215 in FIG. 8. Therefore, the user presses button ① on remote control numerical keypad 208. This brings up a second (206b) level menu identified by reference character 216 in FIG. 9. This menu offers the user three choices with choice one being appropriate as indicated by arrow 218. Accordingly, the user presses button ① on keypad 218 again at this juncture. This brings up a third (206c) level menu 220 (see FIG. 10). This representative menu also offers the user three choices with choice one again being appropriate as indicated by arrow 222. The user accordingly presses keypad button ① for a third time.

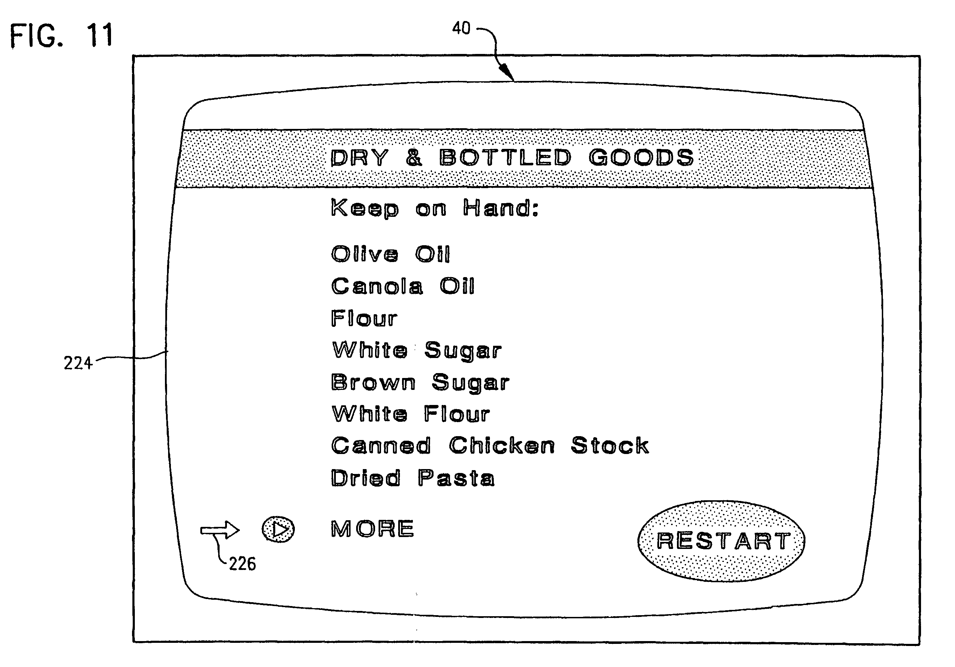

Pressing keypad button ① for the third time retrieves and brings to the screen 40 of integrated unit 34 the information on stocking a pantry sought by the user of system 30. The screen that appears is shown in FIG. 11 and identified by reference character 224. The information sought by the user is displayed in textual form. It remains on screen 40 until further action is taken by the system user.

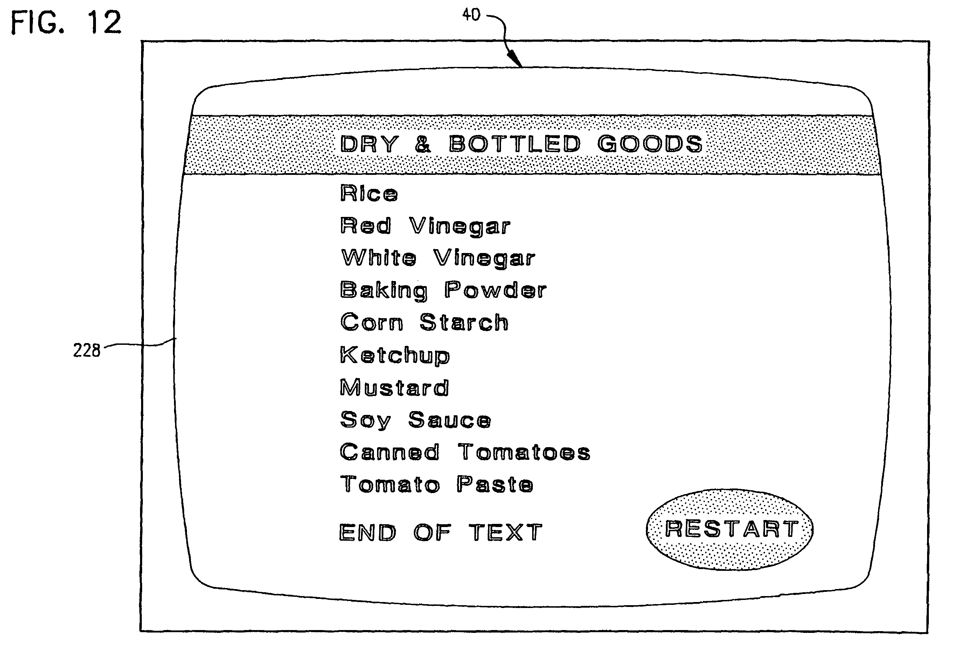

In this particular example, the information on the selected subject is too voluminous to fit on a single screen. In this and like cases, the legend MORE appears at the bottom of the screen. When that happens, the user can proceed to the next screen as suggested by arrow 226 by pressing remote control FWD button 212. In the current example, this brings up on screen 40 a second display shown in FIG. 12 and identified by reference character 228.

Screen 228 ends with the legend END OF TEXT, indicating that all of the information on the subject selected by the system user has been retrieved from disc 32 and displayed on screen 40.

It will be apparent that there are many variations of navigation chart 198 which fall within the compass of the present invention. For example, selecting one of the main menu options may lead the user of system 30 to a static or dynamic display of information instead of a second level menu. Selecting an option from the third level menu may bring to screen 40 a dynamic display of information which coaches the user of system 30 through a task, or more probably most often, one self-contained step of a task. Other options will be readily apparent to the user of appliance 30.

As indicated in FIG. 7, the system user can return at any point, be it a menu or a display of information as shown in FIGS. 11 and 12 to the introductory video 204. This is done by pressing remote control unit RESTART button 210. This ability to jump back to the introductory video by pressing only one button is a significant feature of the invention. It allows the system user at any time to easily and immediately rerun part or all of the introductory video if he or she perceives the need for a refreshed recollection of what is available or how to proceed in order to reach information on a subject of interest.

Alternatively, the instruction set may be structured so that the pressing of RESTART button will return the user of appliance 30 to top level menu 206a instead of introductory video 204 as discussed above and shown in phantom lines in FIG. 7. This is an advantage to those who may see repeated viewing of the introductory video unneeded and unnecessarily time consuming. The system user can return to the first display of interest - i.e., the top level menu - without having to reach that menu from the introductory video with FWD button 212.

Another comparable, and equally important, feature of the invention is that the system user can back up one step in the step-by-step information accessing process by pressing a dedicated remote control button 230 labeled BACK In the example under discussion, for instance, this enables the system user to back up from screen 228 to screen 224, from the latter to third level menu 220, from any menu in the hierarchy to a higher level menu, and from the highest level menu 214 to the introductory video 204. This allows the user to easily and by using only one button review the information presented on screen 40 in a preceding step, to navigate a different path through the available choices, and to return to the introductory video from the top level menu 214.

The arrangement just described is redundant to the extent that the system user can step back from top level menu 214 to introductory video 204 by pressing either BACK button 230 or RESTART button 210. This is purposeful. It eliminates the need for the system user to remember which of these buttons is appropriately pressed to reach the introductory video from the top level menu.

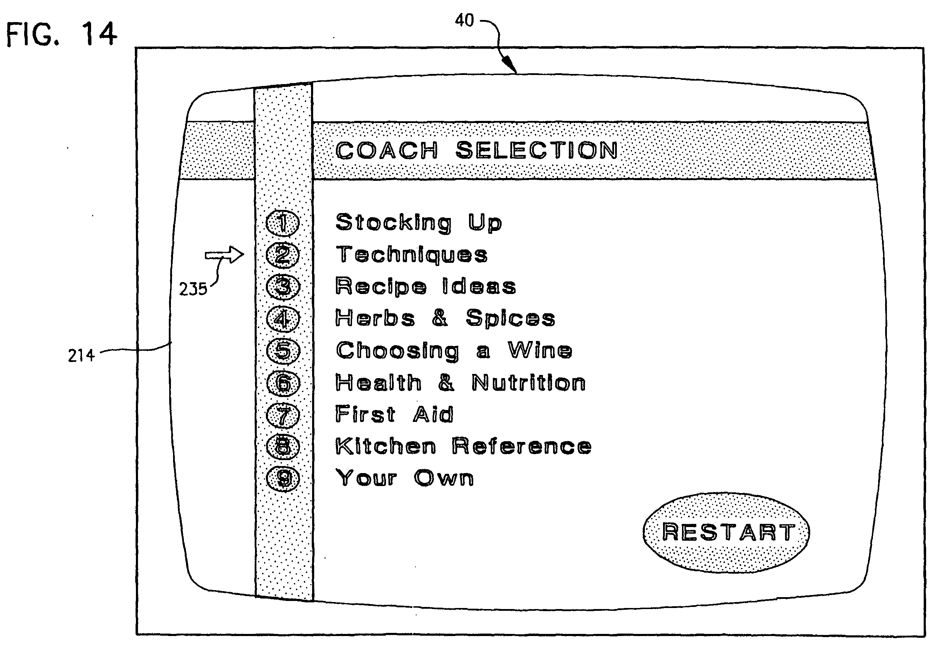

Referring again to the drawing, FIG. 13 is the navigational chart 234 for a second, also representative example of employing remote control 36 to retrieve information from compact disc 32. In this case, the top four levels 206a-206d of menus in a representative five level menu hierarchy are employed; and the information displayed on screen 40 of unit 36 is in the form of an instructional video.

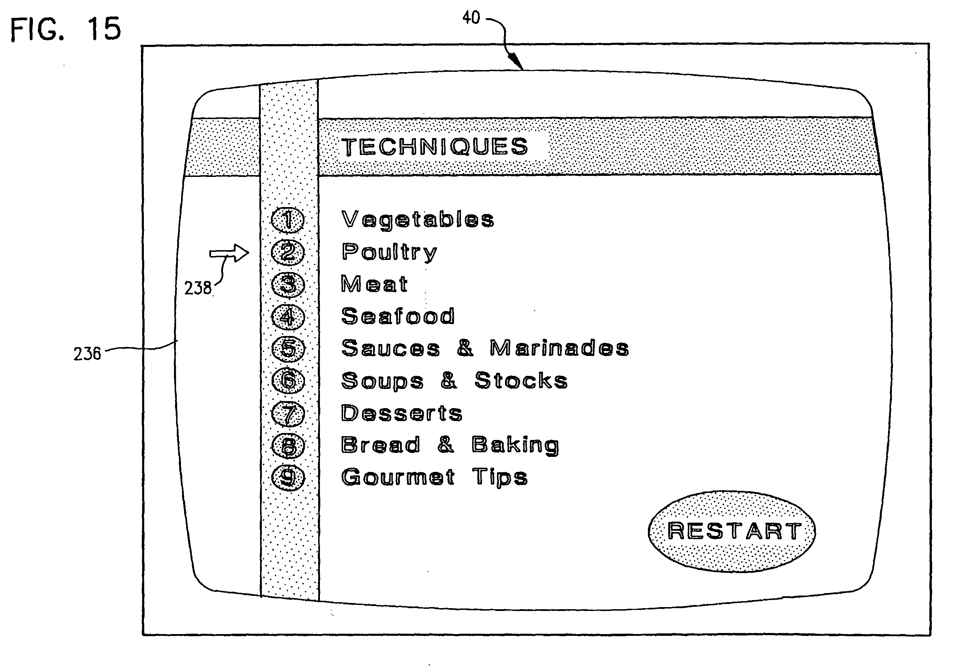

In this representative example, as in every other instance in which the COACH mode of operation is selected with COACH button 202 on remote control 36, the first thing that happens is that introductory video 204 is retrieved from compact disc 32 arid played on screen 40. The user can watch part or all of this video, then press FWD button 212 to advance to the top level menu 214 in the hierarchy. In the scenario under discussion, the system user is looking for information on roasting poultry. To reach this information, and as indicated by arrow 235 in FIG. 14, the user elects option two - Techniques - from the top level menu by pressing button ② on remote control numerical keypad 208. This brings up on integrated unit screen 40 a menu 236 labeled TECHNIQUES (see FIG. 15). The nine options in menu 236 include one labeled Poultry. As indicated by arrow 238 in FIG. 15, the user selects this option by again pressing button ② on remote control numerical keypad 208.

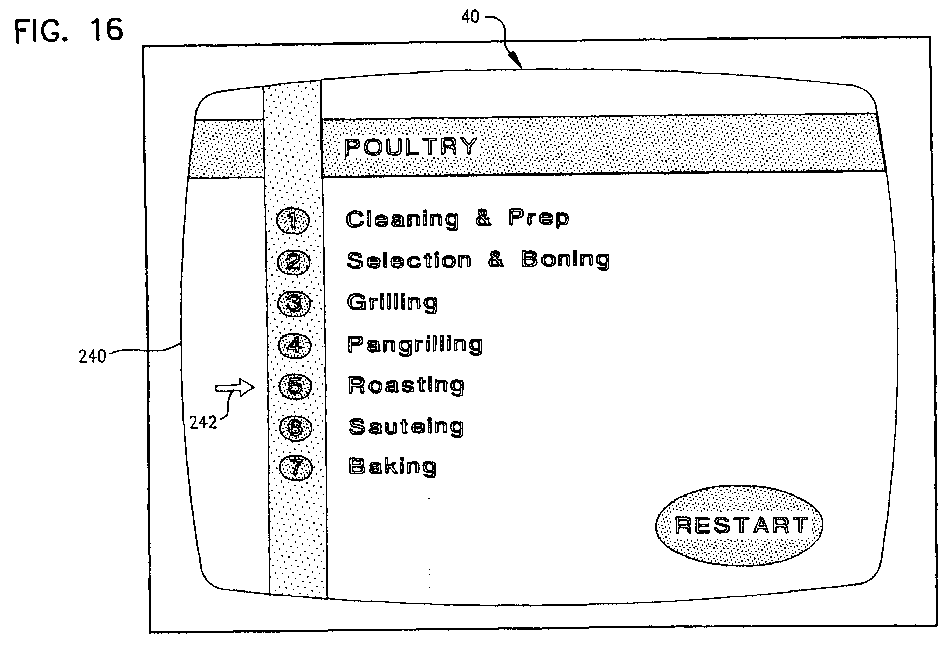

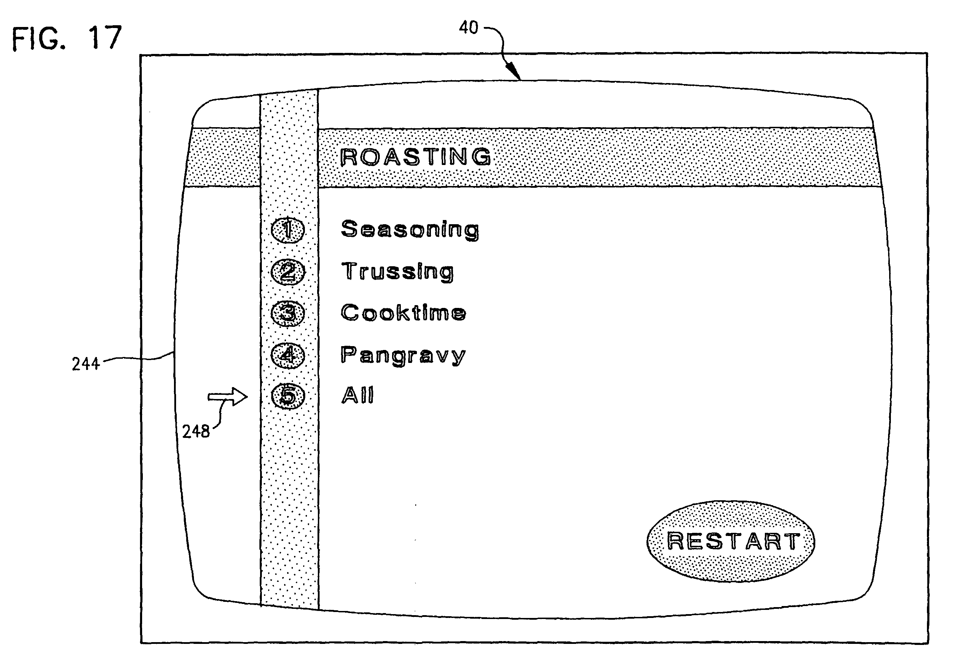

Pressing button ② with menu 236 displayed brings up on screen 40 a third (206c) level menu 240 entitled POULTRY (see FIG. 16). This menu affords the system user seven choices with choice five clearly being the most relevant. As indicated by arrow 242, the system user accordingly presses remote control keypad button ⑤. This brings up on screen 40 a fourth (206d) level menu 244 entitled ROASTING (see FIG. 17). Available from menu 244 is information on seasoning (choice one), trussing (choice two), cooktime (choice three), and pan gravy (choice four) and a fifth choice labeled all. Pressing any of buttons ①, ②, ③, or ④ on remote control numerical keypad 208 will result in an instructional video being retrieved from compact disc 32 and played on integrated unit screen 40. In the current example, the user is looking for information on making gravy. Accordingly, keypad button ④ is pressed as indicated by arrow 248 in FIG. 17; and a video demonstrating how to make gravy from pan juices is played as suggested at 246 in FIG. 13. The corresponding instructional video is played if any of buttons ①, ②, or ③ is pressed. If button ⑤ is pressed, all four videos are played in numerical sequence.

Returning now to FIG. 13, the system user is automatically returned to the fourth (206d) level menu 244 at the end of the selected video or, if choice five is made, after all four videos have been played. From here, or from any other step, the user can return to the preceding step by pressing remote control keypad BACK button 230 or return to introductory video 204 by pressing RESTART button 210.

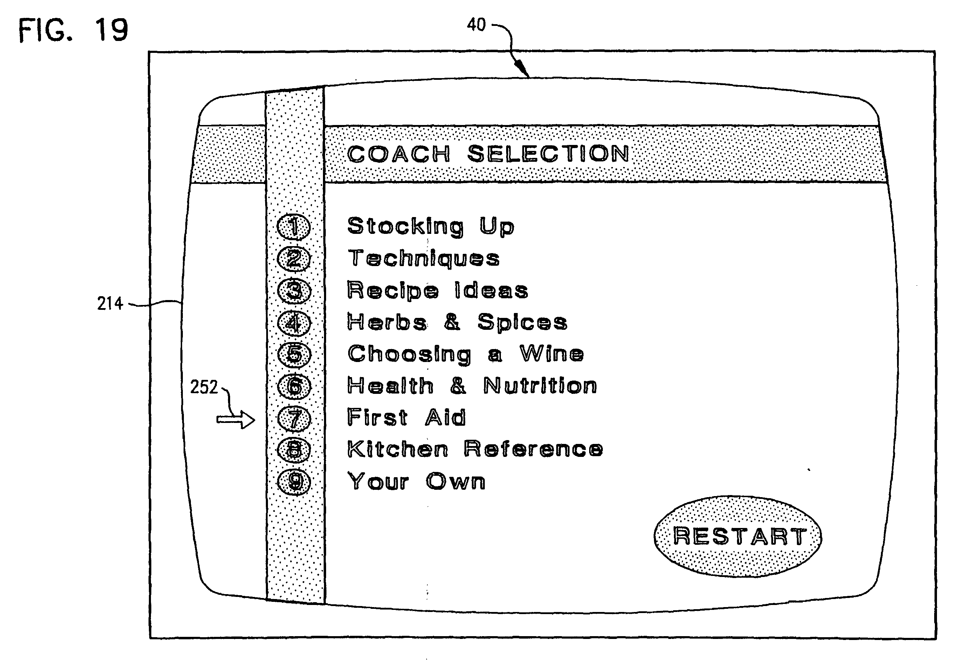

There are categories of information which the system 30 user needs to retrieve as rapidly as possible, in a minimum number of steps, and with as little attention as possible to the information retrieval process. An important one of these categories is first aid. FIG. 18 is a navigational chart 250 showing how quickly and easily one may retrieve first aid information with a system employing the principles of the present invention.

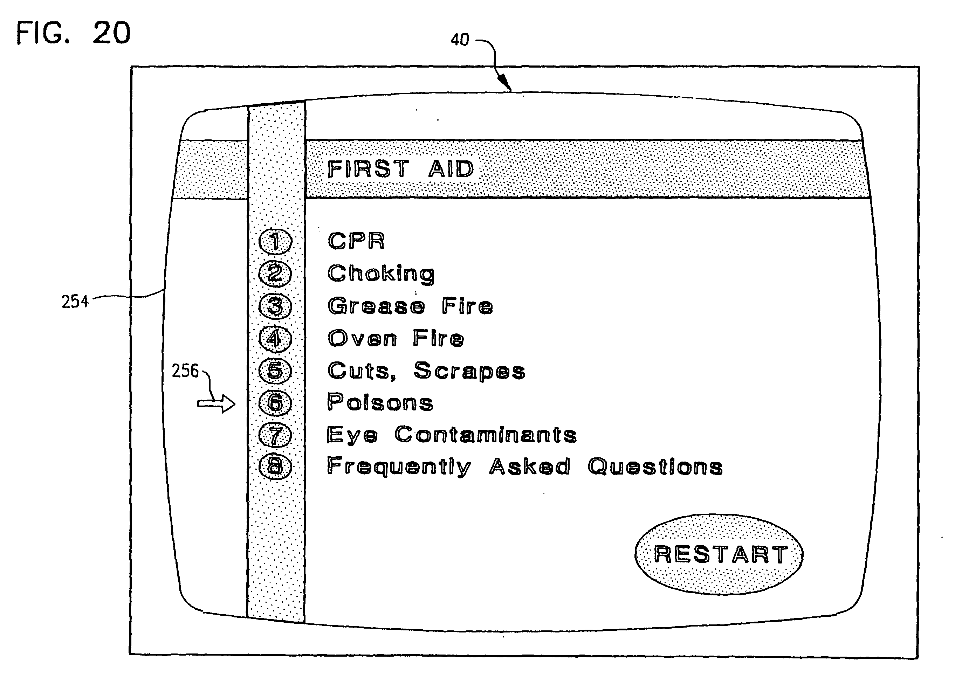

As in the preceding two examples, it is assumed for purposes of convenience that COACH button 202 has just been pressed and that the system has therefore retrieved and begun to play introductory video 204. Immediately or after watching part or all of introductory video 204, the system user presses remote control FWD button 212 to retrieve and display top level menu 214 on integrated unit screen 40. In this case, FIRST AID information is wanted so the user presses button ⑦ on remote control numerical keypad 208 as shown by arrow 252 in FIG. 19. This retrieves and displays on screen 40 a second (206b) level menu 254 labeled FIRST AID (see FIG. 20).

This example assumes that a victim has swallowed a poisonous material. Consequently, the system user presses button ⑥ on remote control keypad 208 as indicated by arrow 256 in FIG. 20 because choice six from menu 254 is labeled POISONS. This retrieves and plays on integrated unit screen 40 an instructional video 258 (see FIG. 18) on treating victims of poisoning.

It is an important feature of the invention, shown in FIG. 18, that this video is automatically replayed until stopped by pressing remote control RESTART button 210 to return to introductory video 204 or BACK button 230 to back up one step to first aid menu 254. This automatic recycle feature is important because the system user is repeatedly given the appropriate information without any action on the user's part, a decided advantage to one preoccupied with treating a victim in need of immediate attention.

In the preceding examples, it is assumed for the purposes of clarity and brevity that the retrieval of information on the selected subject begins with the pressing of remote control unit COACH button 202 to play introductory video 204. This is of course not required. Instead, a system user can, at any menu level, select a further option to reach information on another subject. For example, the user who has just viewed a video on making pan gravy (FIG. 17) can press remote control unit BACK button 230 to return to the next higher level menu 240 (FIG. 16) above the menu 244 from which the pan gravy video was selected. From here, the user can proceed in a different direction - to retrieve information on baking (menu 240 choice seven), for example, by pressing keypad button ⑦ without returning to the introductory video or even a higher level menu.

The arrows 215, 218, 222, 226, 235, 238, 242, 248, 252, and 256 appearing in FIGS. 8, 9, 10, 11, 14, 15, 16, 17, 19, and 20 have been employed above as a convenience to mark the choices being made from successively lower level menus to reach information on different subjects. It is not required that these arrows actually appear on integrated unit screen 40 as the system user navigates through the information retrieval process.

Referring again to FIG. 4, the system 30 user can at any time and from any step return to the television watching mode of operation of system 30 simply by pressing TV button 260 on remote control 36. When this is done, the COACH mode is "frozen." As a consequence, unless integrated unit 34 is in the interim turned off, the user is returned to the precise point where he or she exited the COACH mode when COACH button 202 is next pressed, be this a point in introductory video 204, the display of a menu, the static display of information, or the display of an instructional or informational video. This unique feature is of an obvious convenience to a user who may wish to interrupt the COACH mode of operation to view part or all of a television program and then return to the task at hand.

Referring still to FIG. 4, the illustrated remote control 36 includes a PAUSE button 261. This button allows the system 30 user to interrupt the playing of introductory video 204 or a video selected from a menu. The video is halted until the system user presses PAUSE button 261 for a second time.

Remote control 36 also has a further array 262 of conventional controls for remote operation of television set 38. This complement includes buttons for changing the channel and volume and for turning off the sound, thus affording complete control over the operation of television set 38 from a remote location. If desired, an additional complement of conventional controls may be provided on remote control 36 so that disc player 42 can also be remotely operated.

FIGS. 23A-1, 23A-2, and 23B summarize in graphical form the foregoing detailed discussion of how appliance 30 and encoded data storage device 32 are employed with appliance 30 in the COACH mode to make leam-while-doing instruction and accomplishing the steps of a task available to an appliance user. The introductory video-menu-information data storage layout 270 of FIGS. 23A-1, 23A-2, and 23B for a kitchen use-oriented video compact disc 32 with task oriented coaching is representative. That layout has an introductory video 272 and a four-level menu hierarchy 274. This layout also makes available among other displays of information four video clips 282...288 designed to coach a system user through the four self-contained steps of a single task - roasting poultry - and a static, graphics-text display 290 which lists the ingredients required for that task

In employing the illustrated, representative system 30 and a video compact disc 32 with a layout as shown in FIGS. 23A-1, 23A-2, and 23B for the task just mentioned - i.e., to roast a bird - the user selects choice two from top level main menu 292 by pressing remote control keypad button ② initially, or after having watched introductory video 272. This brings up on screen 40 the second level menu 294 labeled TECHNIQUES. At that juncture, the system user presses ② on remote control keypad 208. This brings up on screen 40 the third level menu 296 labeled POULTRY.

Using button ⑤ on remote control keypad 208, the system user then selects from the third level menu 296 the fourth or bottom level menu 298 labeled ROASTING. This menu makes available the four video demonstrations 282, 284, 286, and 288 which respectively coach the system user through the four steps of roasting a bird - seasoning, trussing, and cooking the bird and, finally, preparing pan gravy. Any or all of these coaching demonstrations can be selected by the user with the remote control keypad buttons ①...⑨ and BACK button 230. For example, the user may elect to see the demonstration on seasoning a bird by pressing button ① once menu 298 is reached, return to that menu at the end of the video by pressing BACK button 230, and then view the video clip on making pan gravy by pressing keypad button ④ or jump directly to the list of ingredients needed to roast the bird by pressing keypad button ⑤. Or, as another example, the user may elect to view the video 288 on making pan gravy after having watched any of the other available demonstrations. In that case, the ingredients list 290 will automatically come up on screen 40. after the video on making pan gravy has ended.

It will be appreciated, in accord with the foregoing, that there are numerous other ways in which the system user can elect to be coached through the task of roasting a bird. Also, it is to be noted that FIGS. 23A-1, 23A-2, and 23B depict only a fragment of layout 270. For example, none of the lower level menus appended to the second level menu 300 entitled STOCKING UP or the coaching information available by navigating downward from menu 300 are shown.

FIG. 24 depicts a navigation chart 304 structured to include a feature of the present invention described in the just-concluded narrative-the automatic default from the display of a video demonstration or other video clip 306 to a graphic display 308 when the video clip ends. In the representative instance illustrated in FIGS. 23A-1, 23A-2, and 23B in which this feature is employed to advantage, the video clip being watched is one coaching a user of system 30 through the last step in the preparation of a dish such as the roasted bird discussed below. Once this clip ends, a graphic display 308 with the list of ingredients needed for the preparation of the dish automatically appears on screen 40. In other applications of the present invention, display 308 may be a parts list, a list of the tools needed to complete a user-selected task, etc.

As one alternative, data storage device 32 may also be encoded such that the menu from which a dynamic display is selected will be automatically returned to screen 40 once the presentation of the display is completed. Another useful option is to encode data storage device 32 so that video displays of the character described in the preceding paragraph will be replayed while the menu from which a choice is made will be restored to screen 40 when other of the available dynamic displays are selected.

It also will be appreciated by the reader from the foregoing that an important feature of the present invention is its versatility. The exemplary system 30 described above and depicted in the drawings, for example, can be readied to make available a different set of information for the kitchen or information for a totally different environment - a workshop, a boat, etc. - simply by replacing one video compact disc 32 with another. No setup, initialization, or other steps are required.

## Claims

1. An information retrieval and display system [30] which can be employed in a first mode to watch television and in a second, learn while doing mode, to obtain coaching on the performance of a task at hand, which system comprises the combination of:
(i) a module [34] which has:
(a) a player [42] for a disk with laser-readable data stored thereon;
(b) a screen [40] for displaying information read from said disk; and,
(c) means for producing a television image on said screen;
(ii) a disk [32] as aforesaid operatively associated with said player [42] the data stored on said disk [32] comprising in digital form:
(a) data constituting information for coaching a user of the system in accomplishing at least one step of said task; and
(b) data comprising an instruction set which enables the user to access the information for accomplishing each of those steps of the task on which information is available; and comprising a hierarchical menu array [176] having at least one menu that offers a user multiple numbered choices corresponding to:
(1) items of information and/or
(2) lower-level menus with an item of information or menu being retrieved and displayed by making a choice from said one menu; and
(c) an introductory video [174] with instructions for using said system [30] in a mode in which data can be read from said disk [32].
(iii) means for controlling the operation of said system;
said control means having means for so controlling the operation of the disc player as to:
(a) cause commands in said instruction set which are selected by the system user to be executed, and
(b) switch the operation of said system between a first, television watching mode of operation and the second, learn while doing mode of operation;
and comprising an array of user-actuated, numbered controls [178] corresponding on a one control to one choice basis with the choices on said one menu and operable with said system in an information-retrieval mode of operation for retrieving the item of information or lower-level menu corresponding to a choice made by actuation of the correspondingly numbered control;
said system defaulting to and playing the introductory video [174] when the second, learn while doing mode of operation is selected.

2. An information-retrieval and display system [30] as defined in claim 1 wherein:
the user-actuatable controls [178] are numbered (1) through (9); and
any multiple choice menu in the hierarchy [176] has a maximum of nine numbered choices.

3. An information-retrieval and display system [30] as defined in claim 1 or in claim 2 in which the menu is a bottom-level menu and the numbered choices correspond to items of information.

4. An information-retrieval and display system [30] as defined in claim 1 or in claim 2 wherein the making of a choice from said one menu causes a menu at the next lower level in the hierarchy to be brought up and displayed on said screen.

5. An information-retrieval and display system [30] as defined in claim 1 or in claim 2 wherein said one menu has choices corresponding both to: (a) at least one menu at the next lower level in said hierarchy, and (b) at least one item of information.

6. An information-retrieval and display system [30] as defined in any of the preceding claims 1-5:
which has a second mode of operation of a different character, and
wherein said control means has the capability, when the system [30] is switched from the information-retrieval mode of operation to the second mode of operation and back to the information-retrieving mode of operation, of returning the operation of the system to the point at which the system was operating when it was switched out of the information-retrieval mode of operation.

7. An information-retrieval and display system [30] as defined in any preceding claim in which said system is so enabled as to default to the retrieval and playing of the introductory video [174] upon restarting operation of said system [30] in a mode in which data can be read from said disk [32].

8. An information-retrieval and display system [30] as defined in any of claims 1-6 in which said system is so enabled as to default to the retrieval and display of the top-level menu in said hierarchy of menus [176] upon restarting operation of said system in a mode in which data can be read from said disk [32].

9. An information-retrieval and display system [30] as defined in any preceding claim which has a user-actuatable control [212] that can be actuated to advance the operation of said disk player [40] from the playing of the introductory video to the retrieval and display of the top-level menu [184] in said hierarchy of menus [176] at any time while the video is playing.

10. An information-retrieval and display system [30] as defined in any of the preceding claims in which the items of information represented by data stored on the encoded disk [32] comprise at least one item of information presentable on said screen [40] as a static display; and
said control means comprises a user-actuatable control [180, 210] for removing said display from said screen [40], said display remaining on said screen [40] until said control [180, 210] is actuated.

11. An information-retrieval and display system [30] as defined in any of claims 1 - 9 in which one of the items of data constituting information for coaching is an informational and/or instructional video;
wherein said control means comprises a user-actuatable control (1) to (9) for selecting said informational or instructional video from a multiple choice menu embedded in said instruction set and displayable on said screen [40] by the system user;
wherein said instruction set is so structured as to cause said menu to be returned to said screen [40] after said video has been played.

12. An information-retrieval and display system [30] as defined in any of the preceding claims 1-9 in which one of the items of data constituting information for coaching is an informational and/or instructional video; and
wherein said control means is so enabled as to cause said informational or instructional video to be continuously replayed until such replaying is stopped by an affirmative action of the user of said system.

13. An information-retrieval and display system [30] as defined in any of the preceding claims in which the user-actuated controls are components of a remote control unit [36].

14. An information-retrieval and display system [30] as defined in any of the preceding claims 1-14 in which the module [34] is in an integrated cabinet having a carrying handle [52] in its top wall.

15. An information-retrieval and display system [30] as defined in claim 14 in which the carrying handle [52] is adapted to engage with a complementary bracket [56] for mounting.

16. An information-retrieval and display system [30] as defined in claim 15 in which a spring loaded detent [66] is provided in the complementary bracket [56] to removably lock the module [34] to the bracket [56].

## Patentansprüche

1. Informationsabruf- und Anzeigesystem [30], welches verwendet werden kann in einem ersten Modus, um fernzusehen, und in einem zweiten, Lernbeim-Tun-Modus, um Unterstützung bei der Durchführung einer Aufgabe zur Hand zu erhalten, wobei das System die folgende Kombination umfasst:
(i) ein Modul [34], welches aufweist:
(a) ein Spieler [42] für eine Scheibe mit Laser-lesbaren Daten darauf gespeichert;
(b) ein Schirm [40] zum Anzeigen von Information, die von der Scheibe gelesen wird; und
(c) Mittel zum Produzieren eines Fernsehbildes auf dem Schirm;
(ii) eine Scheibe [32], wie oben beschrieben, operativ dem Spieler [42] zugeordnet, wobei die auf der Scheibe [32] gespeicherten Daten in digitaler Form aufweisen:
(a) Daten, welche Information darstellen zum Unterstützen eines Benutzers des Systems beim Erfüllen mindestens eines Schrittes der Aufgabe; und
(b) Daten, die einen Befehlssatz umfassen, welcher es dem Benutzer ermöglicht, auf die Information zuzugreifen zum Erfüllen jedes der Schritte der Aufgabe, zu welcher Information verfügbar ist; und die ein hierarchisches Menüfeld [176] aufweisen, welches mindestens ein Menü umfasst, das einem Benutzer mehrfach nummerierte Auswahlen bietet, bezogen auf:
(1) Einheiten von Information und/oder
(2) Niedriger-Niveau-Menüs mit einer Einheit von Information oder Menü, abgerufen und angezeigt durch Treffen einer Auswahl aus dem einen Menü; und
(c) ein Einführungsvideo [174] mit Befehlen zum Benutzen des Systems [30] in einem Modus, in welchem Daten von der Scheibe [32] gelesen werden können;
(iii) Mittel zum Steuern des Betriebs des Systems;
wobei die Steuermittel Mittel aufweisen, um den Betrieb des Scheibenspielers zu steuern, um:
(a) Anweisungen in dem Befehlssatz zu bewirken, die durch den Systembenutzer gewählt werden, um ausgeführt zu werden; und
(b) den Betrieb des Systems umzuschalten zwischen dem ersten, Fernseh-Betriebsmodus, und dem zweiten, Lern-beim-Tun-Betriebsmodus;
und umfassend ein Feld von Benutzer-bedienten, nummerierten Steuerungen [178], die auf einer Ein-Steuerung-zu-Ein-Auswahl-Basis mit den Auswahlen des einen Menüs entsprechen und betreibbar sind mit dem System in einem Informations-Abruf-Betriebsmodus zum Abrufen der Einheit von Information oder Niedriger-Niveau-Menü entsprechend einer Auswahl, getroffen durch Bedienung der entsprechend nummerierten Steuerung;
wobei das System zurückfällt auf den Einführungsvideo [174] und diesen spielt, wenn der zweite, Lern-beim-Tun-Betriebsmodus gewählt wird.

2. Informationsabruf- und Anzeigesystem [30] gemäß Anspruch 1, bei welchem:
die Benutzer-bedienbaren Steuerungen [178] von (1) bis (9) nummeriert sind; und
jedes Mehrfach-Auswahl-Menü in der Hierarchie [176] ein Maximum von neun nummerierten Auswahlen aufweist.

3. Informationsabruf- und Anzeigesystem [30] gemäß Anspruch 1 oder Anspruch 2, bei welchem das Menü ein Tief-Niveau-Menü ist und die nummerierten Auswahlen Einheiten von Information entsprechen.

4. Informationsabruf- und Anzeigesystem [30] gemäß Anspruch 1 oder Anspruch 2, bei welchem das Treffen einer Auswahl von dem einen Menü bewirkt, dass ein Menü bei dem nächst tieferen Niveau in der Hierarchie hochgebracht wird und auf dem Schirm angezeigt wird.

5. Informationsabruf- und Anzeigesystem [30] gemäß Anspruch 1 oder Anspruch 2, bei welchem das eine Menü Auswahlen aufweist entsprechend sowohl: (a) mindestens einem Menü bei dem nächst tieferen Niveau in der Hierarchie, als auch (b) mindestens eine Einheit von Information,

6. Informationsabruf- und Anzeigesystem [30] gemäß einem der vorherigen Ansprüche 1- 5:
welches einen zweiten Betriebsmodus eines unterschiedlichen Charakters aufweist; und
bei welchem das Steuermittel die Fähigkeit aufweist, wenn das System [30] geschaltet wird von dem Informations-Abruf-Betriebsmodus in den zweiten Betriebsmodus und zurück in den Informations-Abruf-Betriebsmodus, des Rückkehrens des Betriebs des Systems zu dem Punkt, bei welchem das System arbeitete, als es aus dem Informations-Abruf-Betriebsmodus herausgeschaltet wurde.

7. Informationsabruf- und Anzeigesystem [30] gemäß einem der vorherigen Ansprüche, bei welchem das System so befähigt ist, dass es in das Abrufen und Spielen des Einführungsvideos [174] fällt beim Wiederstarten des Betriebs des Systems [30] in einem Modus, in welchem Daten von der Scheibe [32] gelesen werden können.

8. Informationsabruf- und Anzeigesystem [30] gemäß einem der Ansprüche 1 - 6, bei welchem das System befähigt ist, in das Abrufen und Anzeigen des Höchst-Niveau-Menüs in der Hierarchie von Menüs [176] zu fallen beim Wiederstarten des Betriebs des Systems in einem Modus, in welchem Daten von der Scheibe [32] gelesen werden können.

9. Informationsabruf- und Anzeigesystem [30] gemäß einem der vorherigen Ansprüche, welches eine Benutzer-bedienbare Steuerung [212] aufweist, die bedient werden kann, um den Betrieb des Scheibenspielers [40] vorzurücken von dem Spielen des Einführungsvideos zu dem Abrufen und Anzeigen des Höchst-Niveau-Menüs [184] in der Hierarchie von Menüs [176] zu jeder Zeit, während das Video spielt.

10. Informationsabruf- und Anzeigesystem [30] gemäß einem der vorherigen Ansprüche, bei welchem die Einheiten von Information, dargestellt durch Daten, gespeichert auf der kodierten Scheibe [32] zumindest eine Einheit von Information aufweisen, die auf dem Schirm [40] als eine statische Anzeige präsentierbar ist; und
das Steuerungsmittel eine Benutzer-bedienbare Steuerung [180, 210] aufweist zum Entfernen der Anzeige von dem Schirm [40], wobei die Anzeige auf dem Schirm [40] bleibt, bis die Steuerung [180, 210] bedient wird.

11. Informationsabruf- und Anzeigesystem [30] gemäß einem der Ansprüche 1 - 9, bei welchem eine der Dateneinheiten, welche Information zum Betreuen darstellen, ein Informations- und/oder Instruktionsvideo ist;
wobei das Steuermittel eine Benutzer-bedienbare Steuerung (1) bis (9) umfasst zum Wählen des Informations- oder Instruktionsvideos aus einem Mehrfach-Auswahl-Menü, eingebettet in dem Befehlssatz und anzeigbar auf dem Schirm [40] durch den Systembenutzer;
wobei der Anweisungssatz so strukturiert ist, dass er veranlasst, dass das Menü zurückgegeben wird auf den Schirm [40], nachdem das Video gespielt worden ist.

12. Informationsabruf- und Anzeigesystem [30] gemäß einem der vorherigen Ansprüche 1 - 9, bei welchem eine der Dateneinheiten, welche Information unterstützend darstellen, ein Informations- und/oder Instruktionsvideo ist; und
wobei das Steuermittel so befähigt ist, dass es bewirkt, dass das Informations- oder Instruktionsvideo kontinuierlich wiedergespielt wird, bis derartiges Wiederspielen gestoppt wird durch eine bestätigende Aktion des Benutzers des Systems.

13. Informationsabruf- und Anzeigesystem [30] gemäß einem der vorherigen Ansprüche, bei welchem die Benutzer-bedienten Steuerungen Komponenten einer Fernbedienungseinheit [36] sind.

14. Informationsabruf- und Anzeigesystem [30] gemäß einem der vorherigen Ansprüche 1 - 13, bei welchem das Modul [34] ein integriertes Gehäuse ist mit einem Tragegriff [52] in seiner oberen Wand.

15. Informationsabruf- und Anzeigesystem [30] gemäß Anspruch 14, bei welchem der Tragegriff [52] ausgelegt ist, um mit einer komplementären Klammer [56] zum Montieren einzugreifen.

16. Informationsabruf- und Anzeigesystem [30] gemäß Anspruch 14, bei welchem eine Feder-gespannte Arretierung [66] vorgesehen ist in der komplementären Klammer [56], um das Modul [34] entfernbar an der Klammer [56] zu befestigen.

## Revendications

1. Un système pour recouvrer et afficher de l'information, susceptible d'être employé dans un premier mode de type télévision, et dans un second mode de type «apprendre en faisant», pour réaliser un entraînement aisé à la réalisation d'une tâche, ce système comprenant, en combinaison :
(i) un module [34] qui possède :
(a) un lecteur [42] pour un disque sur lequel sont stockées des données lisibles par laser ;
(b) un écran [40] pour afficher l'information lue sur le disque ; et
(c) des moyens pour produire une image de télévision sur l'écran ;
(ii) un disque [32] comme indiqué, en liaison opératoire avec le lecteur [42], les données stockées sur le disque [32] comprenant sous forme numérique :
(a) des données constituant de l'information pour entraîner un utilisateur du système dans l'accomplissement d'au moins une étape de ladite tâche ; et
(b) des données comprenant un jeu d'instructions qui permet à l'utilisateur d'accéder à l'information pour accompagner chacune de ces étapes de la tâche sur laquelle des informations sont disponibles ; et comprenant un système de menu hiérarchique [176] possédant au moins un menu qui offre à l'utilisateur un choix multiple numéroté correspondant à :
(1) des éléments d'information et/ou
(2) des menus de niveau inférieur, tandis qu'un élément d'information ou menu est recouvré et appliqué en faisant un choix dans le premier menu ;
et
(c) une vidéo d'introduction [174] avec des instructions pour l'utilisation du système [30] dans un mode dans lequel des données peuvent être lues sur le disque [32] ;
(iii) des moyens pour contrôler le fonctionnement du système ;
ces moyens de contrôle possédant des moyens pour contrôler le fonctionnement du lecteur de disque de manière à :
(a) faire exécuter, dans le jeu d'instructions, des commandes sélectionnées par l'utilisateur du système, et
(b) commuter le fonctionnement du système entre un premier mode de fonctionnement pour observer la télévision, et le second mode de fonctionnement "apprendre en faisant" ;
et comprenant un réseau de commandes numérotées [178] correspondant aux choix du premier menu sur la base "une commande pour un choix" et actionnables dans un mode de fonctionnement de recouvrement de l'information du système, pour recouvrer l'élément d'information ou le menu de niveau inférieur correspondant à un choix fait par actionnement de la commande numérotée correspondante ;
ce système ayant le comportement par défaut de jouer la vidéo d'introduction [174] lors de la sélection du second mode de fonctionnement, "apprendre en faisant".

2. Un système pour recouvrer et afficher de l'information [30] selon la revendication 1, dans lequel :
les commandes actionnables par l'utilisateur [178] sont numérotées de (1) à (9) ; et
tout choix multiple dans la hiérarchie [176] possède un maximum de neuf choix numérotés.

3. Un système pour recouvrer et afficher de l'information [30] selon l'une des revendications 1 et 2, dans lequel le menu est un menu de dernier niveau, et les choix numérotés correspondent à des éléments d'information.

4. Un système pour recouvrer et afficher de l'information [30] selon l'une des revendications 1 et 2, dans lequel la réalisation d'un choix à partir du premier menu produit la mise en place et l'affichage à l'écran d'un menu au niveau inférieur suivant dans la hiérarchie.

5. Un système pour recouvrer et afficher de l'information [30] selon l'une des revendications 1 et 2, dans lequel le premier menu possède des choix correspondant à la fois à (a) au moins un menu au niveau inférieur suivant dans la hiérarchie, et (b) au moins un élément d'information.

6. Un système pour recouvrer et afficher de l'information [30] selon l'une des revendications précédentes, qui possède un second mode opératoire d'un caractère différent, et dans lequel, lorsque le système [30] est commuté depuis le mode opératoire à recouvrement de l'information vers ce second mode opératoire, puis revient vers le mode opératoire à recouvrement de l'information, les moyens de commande ont la capacité de renvoyer le fonctionnement du système au point auquel le système était en fonctionnement lorsqu'il a été commuté pour sortir du mode opératoire de recouvrement de l'information.

7. Un système pour recouvrer et afficher de l'information [30] selon l'une des revendications précédentes, dans lequel ledit système est activé pour avoir par défaut le mode de recouvrement et de jeu de la vidéo d'introduction [174] lors du redémarrage opératoire du système [30] dans un mode dans lequel les données peuvent être lues du disque [32].

8. Un système pour recouvrer et afficher de l'information [30] selon l'une des revendications 1 à 6, dans lequel ledit système est activé pour avoir par défaut le menu du niveau de tête du recouvrement et de l'affichage dans ladite hiérarchie de menus [176], lors du redémarrage fonctionnel du système dans un mode dans lequel les données peuvent être lues du disque [32].

9. Un système pour recouvrer et afficher de l'information [30] selon l'une des revendications précédentes, qui possède une commande actionnable par l'utilisateur [212] qui peut être actionnée pour faire avancer le fonctionnement du lecteur de disques [40] depuis le jeu de la vidéo d'introduction, vers le recouvrement et l'affichage du menu de niveau de tête [184] dans la hiérarchie de menus [176], à tout moment lorsque la vidéo est en cours de jeu.

10. Un système pour recouvrer et afficher de l'information [30] selon l'une des revendications précédentes, dans lequel les éléments d'information représentés par des données stockées sur le disque codé [32] comprennent au moins un élément d'information présentable sur l'écran [40] sous forme d'un affichage statique ; et
les moyens de commande comprennent une commande actionnable par l'utilisateur [180, 210] pour enlever l'affichage de l'écran [40], l'affichage restant à l'écran [40] jusqu'à ce que cette commande [180, 210] soit actionnée.

11. Un système pour recouvrer et afficher de l'information [30] selon l'une des revendications 1 à 9, dans lequel l'un des éléments de données constituant l'information d'entraînement est une vidéo d'informations et/ou d'instructions ;
tandis que les moyens de commande comprennent une commande actionnable par l'utilisateur (1) à (9) pour sélectionner ladite vidéo d'informations ou d'instructions à partir d'un menu à choix multiples incorporé dans le jeu d'instructions et affichable à l'écran [40] par l'utilisateur du système ; et que le jeu d'instructions est ainsi structuré qu'il puisse produire le retour du menu vers ledit écran [40] après que la vidéo a été jouée.

12. Un système pour recouvrer et afficher de l'information [30] selon l'une des revendications 1 à 9, dans lequel l'un des éléments de données constituant l'information d'entraînement est une vidéo d'informations et/ou d'instructions ; et
dans lequel le moyen de commande est capable de produire le re-jeu en continu de la vidéo d'informations ou d'instructions jusqu'à ce que ce re-jeu soit stoppé par une action positive de l'utilisateur du système.

13. Un système pour recouvrer et afficher de l'information [30] selon l'une des revendications précédentes, dans lequel les commandes actionnées par l'utilisateur sont des composants d'une unité de commande à distance [36].

14. Un système pour recouvrer et afficher de l'information [30] selon l'une des revendications 1 à 13, dans lequel le module [34] est dans un meuble intégré possédant une poignée de transport [52] dans sa paroi supérieure.

15. Un système pour recouvrer et afficher de l'information [30] selon la revendication 14, dans lequel la poignée de transport [52] est propre à s'engager sur une bride complémentaire de montage [56].

16. Un système pour recouvrer et afficher de l'information [30] selon la revendication 15, dans lequel un arrêt chargé par ressort [66] est-prévu dans la bride complémentaire [56] pour verrouiller de façon amovible le module [34] sur la bride [56].
